# FASCICULE DE BREVET EUROPEEN

(11) **EP 0 686 554 B1**
(45) Date de publication et mention de la délivrance du brevet: **17.02.1999**
(21) Numéro de dépôt: 95401328.0
(22) Date de dépôt: 08.06.1995
(51) Int. Cl.: B64C 27/82, F01D 9/04

(54) **Aube de redresseur en composite, redresseur la comportant, pour dispositif anti-couple à rotor et stator redresseur carénés, et leur procédé de fabrication**
Gleichrichterflügel aus Verbundwerkstoff und Richtapparat einer Gegenwirkmoment-Vorrichtung mit einem eingelassenen Heckrotor und ihre Verfahren zur Herstellung
Stator and composite stator blade for a counter-torque device consisting of a shrouded rotor and stator and their manufacturing method

(30) Priorité: 10.06.1994 FR 9407141
(43) Date de publication de la demande: 13.12.1995
(73) Titulaire: EUROCOPTER, F-13725 Marignane Cédex (FR)
(72) Inventeur: Bocoviz, Claude Daniel, F-13005 Marseille (FR); Gautier, André, F-13840 Rognes (FR); Barquet, Henri, Fernand, F-13220 Chateauneuf les Martigues (FR)
(74) Mandataire: Bérogin, Francis

(56) Documents cités:
- EP-A- 0 107 543
- FR-A- 2 559 423
- US-A- 5 272 869

## Description

L'invention concerne les dispositifs anti-couple du type à rotor multipale à pas variable et à stator redresseur à aubes profilées fixées en aval du rotor, et qui sont carénés dans les parties arrière d'hélicoptères à un seul rotor principal, comme décrit dans FR 2 534 222, et l'invention se rapporte plus précisément à une aube de redresseur en composite, à un redresseur équipé de telles aubes, et à un procédé de fabrication d'une telle aube ainsi que d'un tel redresseur.

Par FR 2 534 222, on connait un dispositif anti-couple à rotor arrière et stator redresseur carénés pour hélicoptère, comportant une veine, d'axe sensiblement transversal à l'hélicoptère, et dans laquelle sont disposés, d'une part, le rotor, sensiblement coaxial à ladite veine, et engendrant un écoulement d'air transversal, et d'autre part, le stator redresseur, comportant une pluralité d'aubes profilées fixées à l'intérieur de ladite veine en aval du rotor par rapport à l'écoulement d'air, et agencées de façon sensiblement radiale par rapport à ladite veine pour pouvoir récupérer de l'énergie de rotation de l'écoulement d'air à la sortie du rotor sous forme d'une poussée axiale d'anti-couple, s'ajoutant à celle produite par la rotation du rotor dans la veine, sans augmentation de la puissance transmise à cet effet au rotor.

FR 2 534 222 propose également que les aubes du redresseur s'étendent entre un corps central fixe, sensiblement coaxial dans la veine, et la paroi annulaire de la veine de carénage, et qu'elles assurent à elles seules la liaison mécanique entre ce corps fixe et ladite paroi, et donc la fixation du corps fixe et du rotor, monté en rotation sur ce corps, dans la veine, en remplacement de bras supports, souvent au nombre de trois, généralement utilisés pour assurer cette liaison mécanique entre le corps fixe et la paroi de la veine.

Il est encore proposé dans le brevet précité que la veine présente, de l'amont vers l'aval, une entrée convergente à bord arrondi, une partie cylindrique, dans laquelle tournent les pales du rotor, et un divergent se terminant par une sortie divergente, le redresseur étant disposé dans le divergent, et les aubes qui le constituent pouvant être indépendantes les unes des autres, et à profil aérodynamique constant et vrillage nul, par exemple un profil du type NACA 65A10.

Un tel redresseur de flux à aubes fixes profilées remplit simultanément plusieurs fonctions et procure des avantages importants :
aux plans aérodynamiques et acoustiques, les aubes redressent le flux d'air en sortie du rotor et permettent ainsi de transformer une partie de l'énergie de rotation du flux d'air en poussée anti-couple supplémentaire, et le remplacement des bras supports connus [le plus souvent cylindriques et de diamètres relativement importants, baignés dans le flux du rotor et constituant l'une des sources de bruit importantes du dispositif par le bruit d'interaction entre le rotor et les bras supports] par des aubes profilées diminue la traînée tout en diminuant l'émission acoustique du dispositif caréné ;
aux plans du passage des efforts et de la rigidité, le redresseur reliant la structure de l'hélicoptère à l'ensemble mécanique monté dans la veine permet de passer tous les efforts du moyeu du rotor, de la boîte de transmission arrière (pour l'entraînement en rotation du rotor) et de la commande collective du pas des pales du rotor à la paroi de la veine, ces efforts étant mieux répartis par les aubes dans la carène, de sorte que l'utilisation de nervures de reprise d'effort dans cette dernière s'avère inutile, le redresseur augmentant la rigidité de l'ensemble du fait que ses aubes procurent des points de reprise des efforts sur la paroi de la veine plus nombreux qu'un tripode classique de bras supports.

Le problème à la base de l'invention est de proposer des aubes composites procurant un gain de masse par rapport à des aubes métalliques, tout en offrant sensiblement les mêmes rigidité et résistance, et dont la structure soit simple et économique malgré leur réalisation composite. Un autre but est de proposer une aube composite interchangeable avec des aubes métalliques, et donc adaptée à une fixation aisée et indépendante de chaque aube, d'une manière qui lui permette de remplir avantageusement les fonctions simultanées précitées, en facilitant la maintenance du redresseur.

Un autre but de l'invention est de proposer un procédé de réalisation économique d'aubes composites de redresseur.

Un autre but encore est de proposer un redresseur composite d'une seule pièce et interchangeable, permettant d'optimiser les gains de masse, et son procédé de fabrication.

A cet effet, l'invention a pour objet une aube de redresseur, pour dispositif anti-couple caréné d'aéronef à voilure tournante, tel qu'un hélicoptère,
ladite aube étant destinée à être intégrée dans un stator redresseur, lui-même fixé dans une veine d'axe (X-X) sensiblement transversal à l'axe longitudinal de l'aéronef et traversant une partie arrière de l'aéronef dans laquelle ladite veine est délimitée par une paroi annulaire, veine dans laquelle est monté sensiblement coaxialement un rotor qui est entraîné en rotation par un mécanisme fixé sensiblement coaxialement dans la veine, de sorte que la rotation du rotor engendre un flux d'air dans la veine, le stator redresseur étant fixé dans la veine en aval du rotor, par rapport au sens du flux d'air, et comportant en outre un corps central annulaire entourant le mécanisme d'entraînement en rotation,
ladite aube présentant une partie courante à profil aérodynamique qui redresse le flux d'air en aval du rotor vers l'axe de la veine, et qui s'étend entre un pied d'aube et un bout d'aube aux extrémités de la partie courante, l'aube étant fixée par ledit pied et ledit bout respectivement au corps central et à la paroi annulaire de la veine, de façon à supporter le mécanisme d'entraînement en rotation et le rotor dans la veine, et l'aube se caractérise en ce qu'elle est composite et sa partie courante présente des parties d'extrados et d'intrados stratifiées et comprenant chacune un empilement d'au moins trois couches de libres de renfort, essentiellement de carbone, rigidifiées par une résine synthétique d'agglomération thermodurcissable, l'une au moins des couches interne et externe de l'empilement comprenant deux ensembles de libres essentiellement unidirectionnelles et orientés d'environ 30° à environ 70° l'un par rapport à l'autre et sensiblement symétriquement par rapport à l'axe longitudinal de l'aube selon son envergure, et la couche intermédiaire comprend un ensemble de libres essentiellement unidirectionnelles orientées sensiblement selon ledit axe longitudinal de l'aube, l'un au moins des pied et bout d'aube présentant au moins une patte stratifiée de fixation comprenant un empilement de prolongements des couches de libres de renfort de la partie d'intrados et/ou d'extrados de la partie courante avec au moins un empilement complémentaire d'une couche centrale de fibres de renfort essentiellement unidirectionnelles, orientées sensiblement parallèlement à celles de ladite couche intermédiaire dans le pied ou le bout d'aube correspondant, et entre deux plis de tissu équilibré de libres de renfort dont la chaîne est orientée sensiblement parallèlement aux libres unidirectionnelles de ladite couche centrale.

L'aube composite peut être pleine, creuse ou encore telle que les parties d'extrados et d'intrados constituent des revêtements stratifiés formant une coque rigide entourant un noyau de matière synthétique légère, alvéolaire ou en mousse, ayant de préférence sa surface externe compactée et/ou rendue étanche vis-à-vis de la résine d'agglomération des revêtements stratifiés.

Mais, dans tous les cas, les trois couches de fibres de renfort de ses parties d'extrados et d'intrados stratifiées ainsi que la couche centrale de fibres de renfort de l'empilement complémentaire du pied ou du bout d'aube peuvent être des couches simples, c'est-à-dire constituées d'un seul pli de tissu, ou d'une seule nappe ou tresse de fibres de renfort, ou encore des couches constituées chacune par un empilement de plusieurs plis de tissu, nappes ou tresses de fibres de renfort.

Pour procurer des performances mécaniques analogues à celles d'aubes métalliques qu'elles sont destinées à remplacer, les aubes composites selon l'invention sont avantageusement telles que leurs parties stratifiées présentent un taux de fibres de renfort d'environ 40 % à environ 60 % en volume.

A cet effet, selon un premier mode de réalisation, la couche interne de l'empilement a une structure choisie parmi les structures suivantes : une nappe de fibres de renfort essentiellement unidirectionnelles orientées sensiblement selon l'axe longitudinal de l'aube, et au moins un pli de tissu constitué sensiblement à 90 % de fibres de carbone selon la chaîne orientée sensiblement selon l'axe longitudinal de l'aube et sensiblement à 10 % de fibres de verre ou de carbone selon la trame du tissu.

Mais, selon un autre mode de réalisation, la couche interne de l'empilement peut avoir, comme la couche externe de l'empilement des parties d'extrados et d'intrados stratifiées de la partie courante de l'aube, une structure choisie parmi les structures suivantes : une tresse longitudinale de fibres de carbone orientées d'environ 30° à environ 70° les unes par rapport aux autres et sensiblement symétriquement par rapport à l'axe longitudinal de l'aube, et au moins deux nappes superposées de fibres de carbone essentiellement unidirectionnelles et orientées sensiblement symétriquement d'environ ± 15° à environ ± 35° par rapport à l'axe longitudinal de l'aube.

De même, la couche intermédiaire a avantageusement une structure choisie parmi les structures suivantes : une tresse de fibres de renfort essentiellement unidirectionnelles orientées selon l'axe longitudinal de l'aube, une superposition d'au moins deux nappes de fibres de renfort essentiellement unidirectionnelles orientées selon l'axe longitudinal de l'aube, et une superposition d'au moins deux plis d'au moins un tissu constitué sensiblement à 90 % de fibres de carbone selon la chaîne orientée sensiblement selon l'axe longitudinal de l'aube et sensiblement à 10 % de fibres de verre ou de carbone selon la trame du tissu.

Concernant l'empilement complémentaire au niveau de l'un au moins des pied et bout d'aube, sa couche centrale peut comprendre une structure choisie parmi les structures suivantes : au moins une nappe de fibres unidirectionnelles, et au moins un pli de tissu constitué sensiblement à 90 % de fibres de carbone selon la chaîne et à 10 % de fibres de verre ou de carbone selon la trame.

Mais, au niveau du pied d'aube, l'empilement complémentaire peut comprendre, en variante, un empilement d'au moins deux plis de tissu de fibres de renfort dont la chaîne ou la trame est orientée sensiblement parallèlement à l'axe longitudinal de l'aube, et d'au moins deux plis croisés de tissu de fibres de renfort dont la chaîne ou la trame est orientée sensiblement à ± 45° sur l'axe longitudinal de l'aube.

Afin d'isoler en particulier les fibres de carbone de ces couches de fibres de renfort vis-à-vis des éléments de la paroi annulaire de veine et du corps central de redresseur sur lesquels l'aube est fixée par ses bout et pied d'aube, et dans le but d'éviter toute oxydation due à un couple galvanique entre ces matériaux en contact, il est avantageux que l'empilement du pied et/ou du bout de l'aube comprenne au moins une couche de fibres de verre, dans les zones venant en contact avec respectivement le corps central et la paroi annulaire de la veine.

Lorsque le bout ou le pied d'aube comporte deux pattes de fixation stratifiées transversales s'étendant en sens opposé l'une de l'autre, il est avantageux de prévoir une semelle de fermeture stratifiée, entre ces deux pattes de fixation, et comprenant un empilement d'au moins un pli de tissu de fibres de renfort, vers l'intérieur de l'aube, et d'au moins un pli de tissu de fibres de verre, vers l'extérieur de l'aube, la chaîne ou la trame des plis de tissu étant orientée sensiblement selon la direction transversale des pattes de fixation.

Une aube ainsi réalisée peut présenter plusieurs configurations de pied et/ou de bout d'aube, pour sa liaison au corps central ou à la paroi de la veine. En particulier, au moins une patte de fixation du pied et/ou du bout d'aube peut être cambrée par rapport à la partie d'extrados ou d'intrados de l'aube qu'elle prolonge et s'étendre au-dessus ou respectivement au-dessous de ladite partie d'extrados ou respectivement d'intrados, en étant cintrée et/ou inclinée de manière correspondant sensiblement à la courbure d'une surface du corps central ou de la paroi annulaire de veine sur laquelle elle est destinée à être fixée, et/ou de sorte que l'aube est inclinée sur la direction radiale par rapport à l'axe de la veine et/ou en flèche de son pied vers son bout d'aube et de l'amont vers l'aval dans la veine, ce qui est en outre avantageux aux plans de l'acoustique (réduction du bruit d'interaction du sillage des pales du rotor avec les aubes) et mécanique (charge des aubes en compression et non en flexion par la reprise du couple de réaction à la rotation du rotor et meilleur centrage du rotor dans la veine).

Au niveau du pied d'aube, au moins une patte de fixation peut présenter une partie repliée sensiblement radialement par rapport à l'axe de la veine pour l'appui et la fixation contre une bride radiale de fixation du corps central. En variante, le pied d'aube peut présenter une seule patte de fixation s'étendant sensiblement transversalement d'un seul côté de l'aube, et constituée d'un empilement comprenant des prolongements des parties stratifiées d'extrados et d'intrados de la partie courante de l'aube. Selon une autre variante, la patte de fixation du pied d'aube s'étend sensiblement dans le prolongement longitudinal de la partie courante et est destinée à être fixée, de préférence de manière amovible, en appui simple contre une patte de reprise en saillie vers l'extérieur sur le corps central du redresseur. Dans ce cas, la patte de reprise peut être l'une des deux pattes d'une chape de reprise en saillie vers l'extérieur sur le corps central et dans laquelle la patte de fixation du pied d'aube est engagée et retenue.

Dans ces différentes variantes, il est avantageux que la ou les pattes de fixation du bout d'aube se fixent de manière amovible par vissage sur un insert monté dans la paroi annulaire de veine et que la ou les pattes de fixation du pied d'aube se fixent par rivetage, ou mieux encore par vissage si l'on veut une pale composite interchangeable, sur le corps central.

L'invention a également pour objet un redresseur, pour un dispositif anti-couple caréné tel que présenté ci-dessus, et qui se caractérise en ce que son corps central annulaire présente une paroi latérale de forme cylindrique ou cylindro-conique à surface externe sensiblement de révolution axiale, à laquelle les aubes composites à parties d'extrados et d'intrados de leur partie courante comprenant chacune au moins une couche de fibres de renfort rigidifiées par une résine synthétique d'agglomération, et de préférence, mais non exclusivement, telles que définies ci-dessus, sont reliées par leur pied, ainsi qu'une bride en saillie radiale vers l'intérieur, de préférence à l'une de ses extrémités axiales, pour la liaison au mécanisme d'entraînement en rotation, et un bord tombé de rigidification en saillie radiale vers l'intérieur, de préférence à l'autre extrémité axiale.

Le corps central peut être métallique, par exemple en alliage d'aluminium, auquel cas chaque aube composite est individuellement rapportée de manière amovible sur le corps central, qui peut présenter des pattes de reprise en saillie vers l'extérieur de sa paroi latérale et sur chacune desquelles est fixé le pied d'une aube à patte de fixation prolongeant sensiblement sa partie courante.

Mais, en variante, chaque aube composite peut également être rapportée de manière amovible sur un corps central réalisé en un matériau composite moulé par compression à chaud et comprenant des fibres courtes de renfort, de préférence en verre, noyées dans une matrice thermodurcissable, de préférence de type vinylester, et présentant, pour chaque aube dont le pied prolonge la partie courante, une chape en saillie vers l'extérieur de sa paroi latérale annulaire et dans laquelle le pied de l'aube est retenu, ainsi qu'une nervure de rigidification en saillie vers l'intérieur de ladite paroi, sensiblement au niveau de ladite chape de l'aube.

Cependant, un meilleur gain en masse est obtenu avec un redresseur tel que le corps central et les aubes sont d'une seule pièce en matériau composite, le pied de chaque aube prolongeant longitudinalement l'aube correspondante et étant lié au corps central, comprenant un empilement de couches de fibres de renfort sensiblement de même nature que celles des aubes et agglomérées par la même résine, par des couches de liaison de fibres de renfort également sensiblement de même nature que celles des aubes et également agglomérées par la même résine.

L'invention a également pour objet un procédé de fabrication d'une aube de redresseur en composite dont les parties d'extrados et d'intrados de sa partie courante comprennent chacune au moins une couche de fibres de renfort rigidifiées par une résine synthétique d'agglomération, et de préférence, mais non exclusivement, telle que définie ci-dessus, et le procédé selon l'invention se caractérise en ce qu'il comprend les étapes consistant à mouler l'aube par injection, dans un moule fermé et sous dépression, de ladite résine synthétique, qui est une résine d'injection thermodurcissable sensiblement liquide dans une préforme disposée dans le moule et préalablement constituée à l'aide de couches de fibres de renfort, essentiellement en carbone, sensiblement à la forme de l'aube.

Si l'aube est du type comprenant un noyau, le procédé comprend avantageusement les étapes consistant à :
- préparer, par exemple découper, l'ensemble des plis de tissu et/ou nappes et/ou tresses de fibres de renfort, essentiellement sèches, aux dimensions nécessaires à la formation de l'aube,
- draper les éléments préparés selon un drapage défini pour la formation de l'aube, autour d'un noyau de matière légère synthétique, préalablement formé, de façon à réaliser une préforme d'aube à noyau entouré d'une gaine de fibres de renfort,
- disposer la préforme dans le moule d'injection, du type à au moins deux parties complémentaires à empreintes internes complémentaires correspondant à la forme de l'aube,
- fermer le moule de manière étanche et le mettre en dépression,
- injecter sous pression dans le moule une résine thermodurcissable à une température d'injection pour laquelle la résine est sensiblement liquide et de faible viscosité, de préférence non supérieure à 100 mPa.s, et assurer une imprégnation de toutes les couches de fibres de renfort,
- effectuer un cycle de polymérisation de la résine, puis, après refroidissement du moule et de son contenu,
- ouvrir le moule et démouler l'aube.

Afin de maintenir en place les fibres des couches de renfort de la préforme, avant l'injection, il est de plus avantageux de prévoir une étape d'enduction d'un liant époxyde thermoréversible sur les plis de tissu et/ou nappes et/ou tresses de fibres de renfort du drapage.

Le noyau peut être réalisé de différentes façons : il peut être taillé dans un bloc de mousse, ou obtenu par injection dans un moule d'une mousse de polyuréthane en aérosol, le moule pouvant être le moule d'injection de l'aube, dans les empreintes duquel on a préalablement disposé des maquettes aux dimensions et aux formes des revêtements d'intrados et d'extrados. Mais, avantageusement, le noyau est formé en comprimant un pain de mousse dans un moule et en le densifiant superficiellement. En outre, pour favoriser une bonne imprégnation des couches de fibres par la résine, on rend la surface externe du noyau étanche à la résine d'injection, avant le drapage. Ceci peut être réalisé par l'application, autour du noyau, d'un revêtement thermo-rétractable soudé au noyau puis thermoformé. En variante, la surface du noyau est rendue étanche à la résine par densification superficielle à chaud du pain de mousse lors de sa compression pour former le noyau.

Lorsque le redresseur est d'une seule pièce en composite formant le corps central annulaire et les aubes, le procédé de l'invention comprend les étapes consistant à:
- compacter un noyau de matière synthétique légère alvéolaire ou en mousse pour chacune des aubes du redresseur,
- réaliser une préforme pour chaque aube en drapant les couches de fibres de renfort, préalablement préparées aux dimensions nécessaires, sur le noyau correspondant,
- réaliser une préforme du corps central de redresseur par drapage et empilement des différentes couches de fibres de renfort, préalablement préparées, qu'il comporte,
- mettre en place les préformes des aubes et la préforme du corps de redresseur dans un moule d'injection,
- draper, dans le moule d'injection, des couches de fibres de renfort de liaison entre les préformes des aubes et du corps de redresseur,
- fermer le moule de manière étanche, le mettre en dépression, de préférence par le bout des aubes, et injecter une résine thermodurcissable à une température d'injection telle qu'elle présente une faible viscosité et est sensiblement liquide, puis
- assurer un cycle de polymérisation et enfin démouler le redresseur.

D'autres avantages et caractéristiques de l'invention ressortiront de la description donnée ci-dessous, à titre non limitatif, d'exemples de réalisation décrits en référence aux dessins annexés sur lesquels :
- la figure 1 est une vue en perspective de 3/4 arrière d'un dispositif anti-couple caréné, avec rotor et stator redresseur disposés dans une veine traversant la partie arrière d'un hélicoptère, le rotor étant représenté sorti de la veine avec arrachement partiel, pour plus de clarté,
- la figure 2 est une vue schématique partielle, en élévation latérale depuis la sortie de la veine, du redresseur de la figure 1,
- la figure 3 est une coupe selon III-III de la figure 2, et avec une coupe axiale de la liaison d'un bout d'aube à la paroi de la veine,
- la figure 4 représente, à plus grande échelle, la coupe axiale détaillée de la liaison du bout d'aube à la veine,
- la figure 5 est une vue à plus grande échelle d'un premier exemple d'aube composite du redresseur de la figure 2,
- les figures 6 et 7 sont des vues selon les flèches VI et VII respectivement sur les figures 5 et 2,
- les figures 8, 9 et 10 sont des vues respectivement en plan, en élévation de face et en perspective d'un second exemple d'aube composite,
- les figures 11 et 12 sont des vues schématiques analogues à la figure 5 respectivement d'un troisième et d'un quatrième exemples d'aube composite,
- la figure 13 est une vue schématique en partie en élévation et en partie en coupe du pied d'un cinquième exemple d'aube composite et de sa liaison à un corps de redresseur composite,
- la figure 14 est une vue schématique en perspective d'un moule d'injection et d'une préforme d'aube composite,
- la figure 15 est une vue schématique en élévation de l'arrière (c'est-à-dire du côté de la sortie de la veine) d'une variante de redresseur en composite à aubes d'une seule pièce avec le corps central,
- la figure 16 est une demi-coupe axiale du corps central et une vue en élévation latérale d'une partie attenante d'une aube du redresseur de la figure 15,
- les figures 17 et 18 sont deux vues en plan de plis de fibres de liaison des aubes au corps central du redresseur des figures 15 et 16, et
- les figures 19 et 20 sont des vues schématiques partielles et de l'avant représentant la disposition respectivement des plis des figures 17 et 18 pour la liaison des aubes au corps central du redresseur.

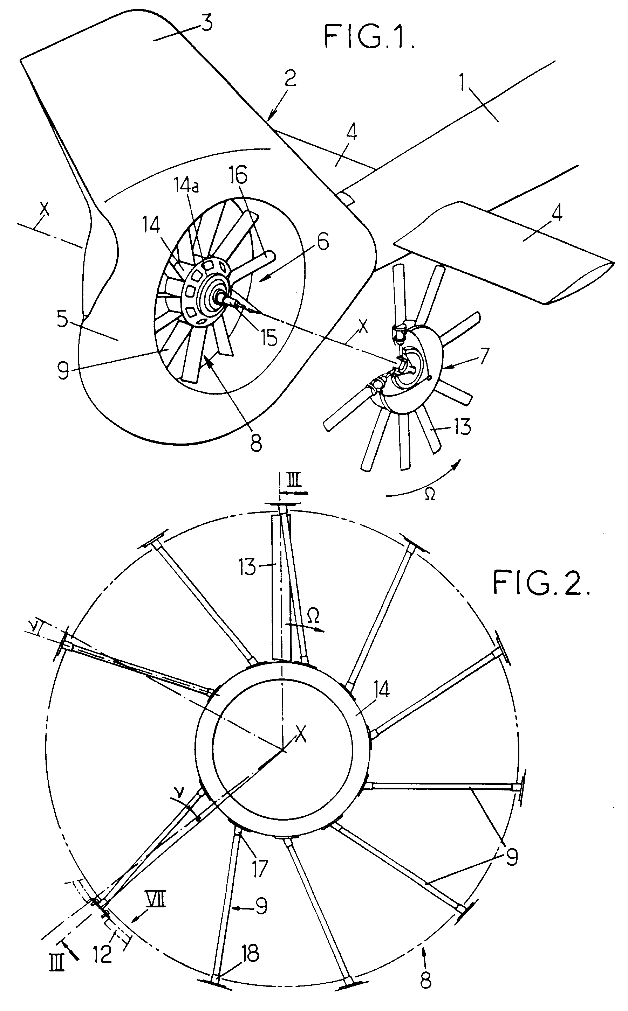

Sur la figure 1, la poutre de queue 1 d'un hélicoptère, dont le fuselage et l'unique rotor principal ne sont pas représentés, supporte à son extrémité arrière un empennage 2, dont la partie supérieure est aménagée en dérive verticale 3, et une dérive horizontale à deux plans 4 s'étendant de part et d'autre de la poutre 1.

La base de l'empennage 2 est agencée en carène 5 traversée transversalement par une veine 6 d'écoulement d'air d'un dispositif anti-couple caréné comprenant également un rotor 7 multipale à pas variable, monté rotatif et sensiblement coaxial dans la veine 6, ainsi qu'un stator redresseur 8, fixé en aval du rotor 7 dans la veine 6 par rapport au sens d'écoulement du flux d'air traversant cette dernière, et comportant des aubes fixes 9.

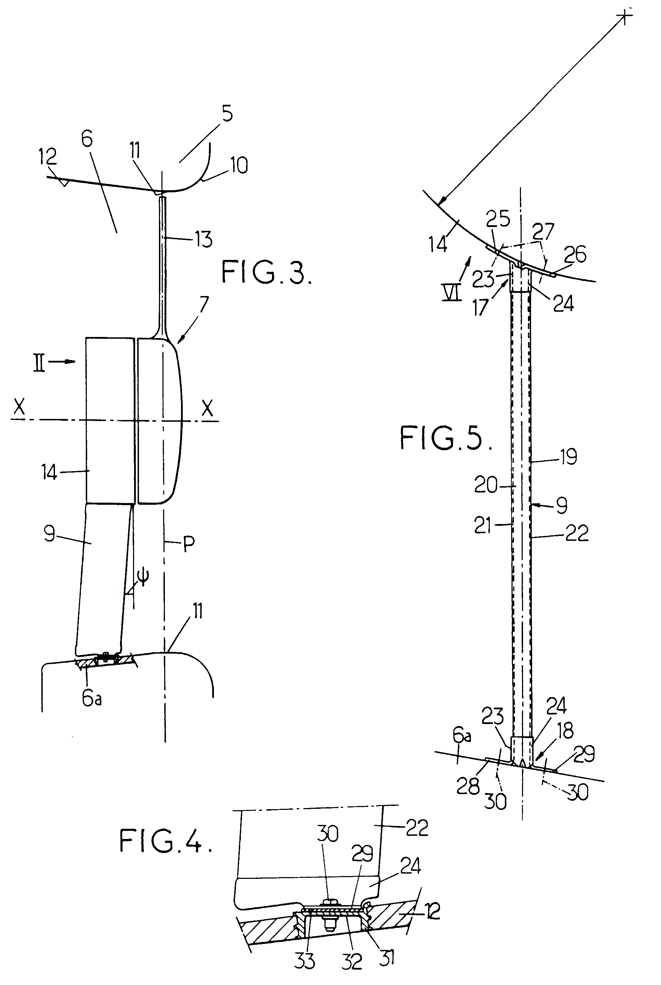

La veine 6 présente, autour de son axe X-X sensiblement transversal à l'axe longitudinal de l'hélicoptère, une forme sensiblement de révolution décrite en référence à la figure 3, et comprenant une entrée convergente 10, à bord arrondi, prolongée, vers la sortie de la veine 6, par une partie cylindrique 11, elle-même prolongée jusqu'à la sortie par un divergent 12. Le rotor 7 est monté dans la veine 6 du côté de son entrée et de sorte que ses pales 13 tournent dans la partie cylindrique 11 de la veine 6, les axes de changement de pas des pales 13 définissant un plan P de rotation du rotor, dans lequel ils se déplacent et qui est sensiblement perpendiculaire à l'axe X-X de la veine carénée 6. Le rotor 7 est monté et entraîné en rotation sur une boîte de transmission arrière 14a (voir figure 1) logée et fixée dans un corps central annulaire 14, de forme externe cylindrique et sensiblement coaxial à la veine 6, ce corps 14 étant solidaire de la structure de l'empennage 2 par l'intermédiaire des aubes 9 du redresseur 8, qui maintiennent le corps 14 au centre de la veine 6 et du côté de sa sortie par rapport au rotor 7.

Dans cet exemple, le corps 14 est réalisé par usinage d'un bloc d'alliage d'aluminium à partir d'une ébauche éventuellement matricée. Le corps 14 enveloppe la boîte de transmission arrière, formant un mécanisme d'entraînement en rotation du rotor 7 par un arbre moteur 15, lui-même entraîné à partir d'un arbre de transmission traversant un bras 16 et relié à une sortie annexe de la boîte de transmission principale de l'hélicoptère. Une partie du bras 16 est disposée sensiblement radialement dans la veine 6, à la place sensiblement de l'une des aubes 9 du redresseur 8, dans l'espace délimité entre les deux aubes 9 les plus écartées l'une de l'autre sur la figure 2. De façon également connue, pour faire varier l'amplitude de la poussée transversale anti-couple, engendrée par la rotation du rotor 7 dans la veine 6 créant un écoulement d'air guidé dans cette dernière, le corps 14 et le rotor 7 enveloppent un dispositif de commande collective du pas des pales 13, actionné par une bielle de commande, non représentée, car le bras 16 de la figure 1 sert de carénage à l'arbre de transmission et à cette bielle.

Pour ce qui concerne la structure, la configuration et le fonctionnement de la boîte de transmission arrière, et du dispositif de commande collective du pas des pales 13, qui sont logés dans le corps 14, ainsi que du rotor 7, on se reportera avantageusement aux brevets français FR 1 531 536 et américains US-3,514,097 et US-4,626,173, qui sont incorporés dans le présent mémoire descriptif par voie de référence, car ces organes ne font pas l'objet de l'invention.

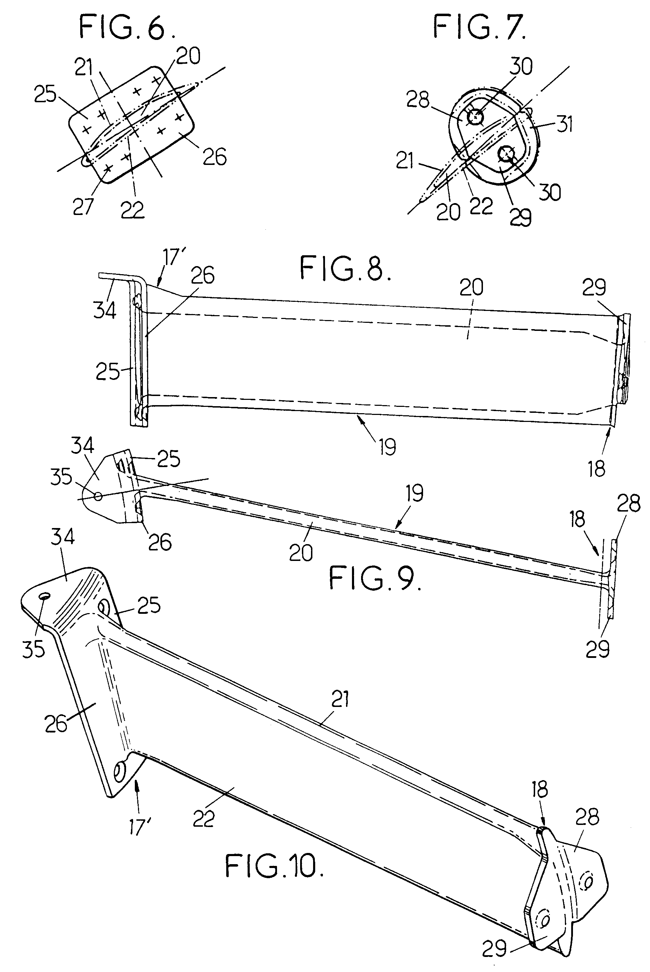

Les aubes 9, fixées dans la veine 6 en aval des pales 13 du rotor 7, sans toutefois sortir du divergent 12 de la veine 6, assurent une récupération de l'énergie de rotation de l'écoulement d'air en aval des pales 13, en redressant cet écoulement vers l'axe X-X de la veine 6, et en procurant un supplément de poussée anti-couple, comme expliqué dans FR 2 534 222, dont la description est incorporée dans le présent mémoire descriptif par voie de référence, en particulier pour ce qui concerne la description des figures 4 et 5 de ce brevet.

Le redressement du flux d'air par les aubes 9 est notamment assuré par le choix approprié du profil aérodynamique dissymétrique des aubes 9, et en particulier de sa cambrure et de son calage angulaire par rapport à l'axe X-X de la veine 6.

Dans l'exemple des figures 1 à 3, le redresseur 8 dans une veine 6 de 1 m de diamètre au niveau de sa partie cylindrique 11, comprend dix aubes 9 à profil aérodynamique et le bras de transmission 16, qui sont régulièrement répartis en direction circonférentielle autour de l'axe X-X. Toutefois, le bras 16 est sensiblement radial et de section circulaire, alors que chaque aube 9 présente un profil aérodynamique de type NACA 65 avec par exemple une épaisseur relative de 10 %, une cambrure constante, choisie entre environ 21° et environ 27°, par exemple 23°, et un calage angulaire fixe choisi entre environ 2° et environ 3°, par exemple 2,5°, et orienté à piquer. En outre, chaque aube 9 n'est pas radiale, mais inclinée sur la direction radiale d'un angle ν compris entre environ 1° et environ 25°, mesuré sur l'envergure de l'aube 9 à 0,8 R où R est le rayon de la veine 6 comme représenté sur la figure 2, cette inclinaison étant assurée du pied 17 de chaque aube 9, par lequel elle est fixée au corps 14, vers le bout 18 de l'aube 9, par lequel elle est fixée à la paroi latérale et annulaire 6a de la veine 6 de carénage, dans le sens contraire au sens de rotation des pales 13 du rotor 7, indiqué par la flèche Ω. Ce calage angulaire des aubes 9 par rapport aux radiales fait passer le couple de réaction à la rotation du rotor 7, qui sollicite le corps 14, en compression dans les aubes 9, et non plus en flexion, ce qui accroît la rigidité du support du corps 14, des organes qu'il enveloppe et du rotor 7 dans la veine 6.

Cette inclinaison ν, par exemple de 10°, diminue également le bruit de rotation du rotor 7, car elle évite que l'interférence entre le sillage d'une pale 13 et une aube 9 ne se produise simultanément sur toute l'envergure commune à la pale et à l'aube, puisque les pales 13 sont sensiblement radiales par rapport à l'axe X-X de la veine 6.

Le pied 17 et le bout 18 de chaque aube 9, qui se rapportent individuellement et respectivement sur la paroi latérale cylindrique du corps 14 et sur la surface tronconique du divergent 12 de la paroi de veine 6a, sont aussi agencés pour que chaque aube 9 soit de plus inclinée en flèche de son pied 17 vers son bout 18 et de l'amont vers l'aval dans la veine 6, d'un angle Ψ, comme montré sur la figure 3, choisi entre environ 1° et environ 6°, par exemple 4°. Cette inclinaison Ψ permet d'écarter le bord d'attaque des aubes 9 du plan de rotation P des pales 13, et donc du bord de fuite de ces dernières, en particulier dans la partie périphérique de la veine 6, ce qui est favorable à une diminution du bruit d'interférence entre les pales 13 et les aubes 9. Simultanément, dans la partie centrale de la veine 6, les aubes 9 peuvent maintenir le corps 14 à proximité du plan P de rotation du rotor 7, ce qui favorise un bon centrage de ce dernier dans la veine 6.

La partie courante 19 à profil aérodynamique s'étend sur chaque aube 9 de son pied 17 à son bout 18, et chaque aube 9 est en matériaux composites à matrice constituée d'une résine synthétique d'agglomération rigidifiée et armée de fibres de renfort, essentiellement en carbone, et l'aube 9 est fabriquée par la mise en oeuvre du procédé connu dit "RTM" (Resin Transfer Moulding) consistant essentiellement à mouler l'aube par injection d'une résine liquide de préférence thermodurcissable dans des couches de fibres de renfort essentiellement sèches préalablement préformées sensiblement à la forme de l'aube et prédisposées dans un moule fermé mis sous vide.

Comme représenté sur les figures 5 à 7, la partie courante 19 de l'aube 9 comprend un noyau 20 en mousse, par exemple en mousse de dénomination commerciale ROHACELL WF 51 (51 kg/m3), dont la surface externe est compactée et rendue étanche à la résine d'injection, et le noyau 20 est entouré d'une coque rigide formée des parties d'extrados et d'intrados 21 et 22 constituées chacune, par exemple, d'un empilement de couches de fibres de renfort agglomérées par la résine de rigidification, et constituant ainsi des revêtements stratifiés.

Dans cet exemple, chaque revêtement stratifié 21 ou 22 est constitué d'un empilement de trois couches de fibres de renfort rigidifiées par la résine, et la couche interne (contre le noyau 20) comme la couche externe de l'empilement sont chacune constituées d'une tresse longitudinale à 60° de fibres unidirectionnelles de carbone, c'est-à-dire d'une tresse à deux faisceaux de fibres unidirectionnelles, les faisceaux étant inclinés de 60° l'un par rapport à l'autre et s'étendant symétriquement par rapport à l'axe longitudinal de l'aube 9, selon son envergure. En variante, on peut utiliser une tresse longitudinale à 45°, ou telle que les faisceaux de fibres unidirectionnelles sont inclinés l'un par rapport à l'autre d'un angle compris entre environ 30° et environ 70°, symétriquement par rapport à l'axe longitudinal de l'aube. Selon une autre variante, la couche externe ou interne est constituée par la superposition de deux nappes unidirectionnelles de fibres de carbone orientées symétriquement par rapport à l'axe longitudinal de l'aube 9 et inclinées sur cet axe d'un angle de ± 35° ou de ± 15°, ou de tout angle compris entre ces valeurs. La couche interne peut également, selon une autre variante, être constituée d'une nappe de fibres unidirectionnelles de carbone à 0°, c'est-à-dire orientées parallèlement à l'axe longitudinal de l'aube 9, ou d'un pli d'un tissu unidirectionnel hybride constitué à 90 % de fibres de carbone formant la chaîne du tissu orientée parallèlement à l'axe longitudinal de l'aube, et à 10 % de fibres de verre formant la trame du tissu, ou encore d'un pli d'un tissu semblable où les 10% de fibres selon la trame sont également en carbone.

La couche intermédiaire de chaque revêtement stratifié 21 ou 22 comprend essentiellement des fibres unidirectionnelles de carbone orientées selon l'axe longitudinal de l'aube, et est constituée d'une tresse longitudinale de telles fibres à 0°, ou, en variante, d'une superposition d'au moins deux mais de préférence trois nappes de fibres de carbone unidirectionnelles parallèle à l'axe longitudinal de l'aube, ou encore selon une autre variante, une superposition d'au moins deux mais de préférence trois plis d'un tissu unidirectionnel hybride constitué à 90 % de fibres de carbone selon la chaîne, parallèle à l'axe longitudinal de l'aube, et à 10 % de fibres de verre selon la trame du tissu, ou d'un tissu semblable à 10 % de fibres de carbone selon la trame.

Le pied 17 et le bout 18 de l'aube 9 sont chacun également stratifié et formé de parties latérales plus épaisses 23 et 24 constituées chacune par un empilement de prolongements des couches de fibres du nappage du revêtement respectivement d'extrados 21 et d'intrados 22 de la partie courante 19, avec de plus, sur l'extérieur de ces prolongements, des couches de fibres d'un empilement complémentaire. Dans un premier exemple de réalisation, l'empilement complémentaire comprend, au pied 17 comme au bout 18 de l'aube 9, une couche centrale de fibres de carbone unidirectionnelles parallèles aux fibres unidirectionnelles de la couche intermédiaire des prolongements des revêtements d'extrados 21 et d'intrados 22, et prise en sandwich entre deux plis d'un tissu équilibré (à répartitions sensiblement égale des fibres dans la chaîne et dans la trame du tissu) de fibres de carbone dont la chaîne est orientée parallèlement aux fibres unidirectionnelles de la couche centrale. Cette dernière est constituée d'au moins une mais de préférence de deux nappes superposées de fibres unidirectionnelles de carbone à 0°, ou en variante, d'au moins un mais de préférence de deux plis superposés de tissu unidirectionnel hybride à 90 % de fibres de carbone selon la chaîne, à 0°, et à 10 % de fibres de verre selon la trame, ou de tissu semblable à 10 % de fibres de carbone selon la trame. Dans un second exemple de réalisation, l'empilement complémentaire au bout d'aube 18 est réalisé comme ci-dessus, mais au pied d'aube 17 il est constitué, vers l'intérieur (contre les prolongements des revêtements stratifiés 21 d'extrados et 22 d'intrados) d'au moins deux mais de préférence de trois plis de tissu équilibré de fibres de carbone dont la chaîne ou la trame est parallèle à l'axe longitudinal de l'aube, et, vers l'extérieur, de deux plis superposés et croisés de tissu équilibré de fibres de carbone, dont la chaîne ou la trame est inclinée à ± 45° sur l'axe longitudinal de l'aube.

L'empilement des parties surépaissies 23 et 24 des pied et bout d'aube 17 et 18 est revêtu sur l'extérieur d'au moins un pli de tissu de verre, afin d'isoler les fibres de carbone des autres couches dans les zones de contact avec le corps central 14 et la paroi annulaire 6a de la veine 6, et ainsi d'éviter toute oxydation qui serait due à un couple galvanique entre les matériaux en contact.

Pour réaliser les nappages des partie stratifiées décrites ci-dessus, on peut utiliser notamment les tissus commercialisés par la société française BROCHIER sous la dénomination INJECTEX référence GU 230 pour le tissu unidirectionnel hybride 90/10 carbone/verre d'épaisseur 0,26 mm, et référence GB 305 pour le tissu équilibré de carbone, qui est un sergé 2/2 de 0,33 mm d'épaisseur.

Les nappages des différentes parties stratifiées sont définis de façon à présenter un taux de fibres de renfort compris entre environ 40 % et environ 60 %, en volume, et de préférence proche de 50 %, la matrice étant de préférence une résine époxyde à température de polymérisation de 180°C, par exemple la résine commercialisée sous la référence PR 500 par la société américaine 3M et d'une densité de 1,55. En variante, la matrice peut être une résine époxyde de la classe dite "à 120°C", par exemple celle commercialisée par la société CIBA GEIGY sous la dénomination ARALDITE LY 564 avec durcisseur HY 2954, qui s'injecte à 60°C à l'état liquide avec une viscosité faible de 100 mPa.s.

Dans l'exemple des figures 2 à 7, les parties stratifiées 23 et 24 du pied d'aube 17 sont prolongées du côté opposé à la partie courante 19 par des parties stratifiées cambrées transversalement au plan longitudinal défini par l'axe longitudinal et par la corde de l'aube, et formant des pattes de fixation stratifiées 25 et 26 s'étendant sensiblement en sens opposé l'une de l'autre, l'une 25, du côté ou "au-dessus" du revêtement d'extrados 21, et l'autre 26 du côté ou "au-dessous" du revêtement d'intrados 22, comme représenté sur les figures 5 et 6, et ces pattes 25 et 26 sont fixées à la paroi latérale du corps 14 par des moyens de fixation schématisés en 27.

De même, les parties stratifiées 23 et 24 du bout d'aube 18 sont respectivement prolongées, de manière similaire, par des pattes de fixation 28 et 29 stratifiées s'étendant en sens opposé l'une de l'autre, l'une 28 du côté du revêtement d'extrados 21 et l'autre 29 du côté du revêtement d'intrados 22, ces deux pattes 28 et 29 étant fixées à la paroi du divergent 12 de la veine 6 par des moyens de fixation amovibles 30.

Comme représenté sur les figures 4 et 7, les deux pattes 28 et 29 du bout d'aube 18 sont chacune fixées par un ensemble vis-écrou 30 sur la facette plane 32, affleurant dans la face interne du divergent 12, d'un insert 31 métallique ou composite, ancré dans la paroi du divergent 12, avec interposition d'une cale 33 amovible (par exemple pelable) entre les pattes 28 et 29 et l'insert 31, pour le réglage du centrage du redresseur 8 dans la veine 6.

Les pattes de fixation 25 à 29 de l'aube 9 sont cintrées et inclinées par rapport à sa partie courante 19 de manière à présenter une courbure ou une orientation correspondant sensiblement à la courbure des deux surfaces sensiblement de révolution axiale du corps central 14 et du divergent 12 sur lesquelles elles se fixent respectivement, et également pour que l'aube 9 présente les angles d'inclinaison ν et Ψ comme décrits ci-dessus.

Les moyens 27 de fixation du pied d'aube 17 sur le corps central 14 sont des rivets si on souhaite un redresseur 8 interchangeable, mais peuvent être des ensembles vis-écrou si l'on veut des aubes 9 interchangeables, car rapportées individuellement et de manière amovible sur le corps 14 comme sur la paroi 6a de la veine 6.

L'exemple d'aube des figures 8 à 10 ne se distingue principalement de l'aube des figures 5 à 7 que par la réalisation du pied d'aube, de sorte que les mêmes repères numériques sont utilisés pour désigner les mêmes éléments. On retrouve ainsi un bout d'aube 18 à deux pattes de fixation stratifiées 28 et 29 qui se fixent par vissage sur un insert dans la paroi de la veine, et une partie courante 19 à noyau de mousse 20 entouré de revêtements stratifiés d'extrados 21 et d'intrados 22.

Mais les deux pattes stratifiées 25 et 26 de fixation du pied d'aube 17' se prolongent, du côté du bord d'attaque de l'aube, par une partie commune 34 cambrée ou repliée sensiblement à angle droit, pour s'étendre radialement par rapport à l'axe X-X de la veine 6 lorsque l'aube est mise en place dans cette veine et sur le corps central 14, et cette partie 34 vient en appui contre une bride radiale en saillie vers l'intérieur à l'avant du corps central 14, pour la reprise de la boîte de transmission arrière 14a, et la partie 34 présente un orifice 35 de vissage contre cette bride radiale, les pattes 25 et 26 se fixant également par vissage contre la paroi latérale du corps central 14.

Cette structure de pied d'aube 17' convient avantageusement à une aube interchangeable.

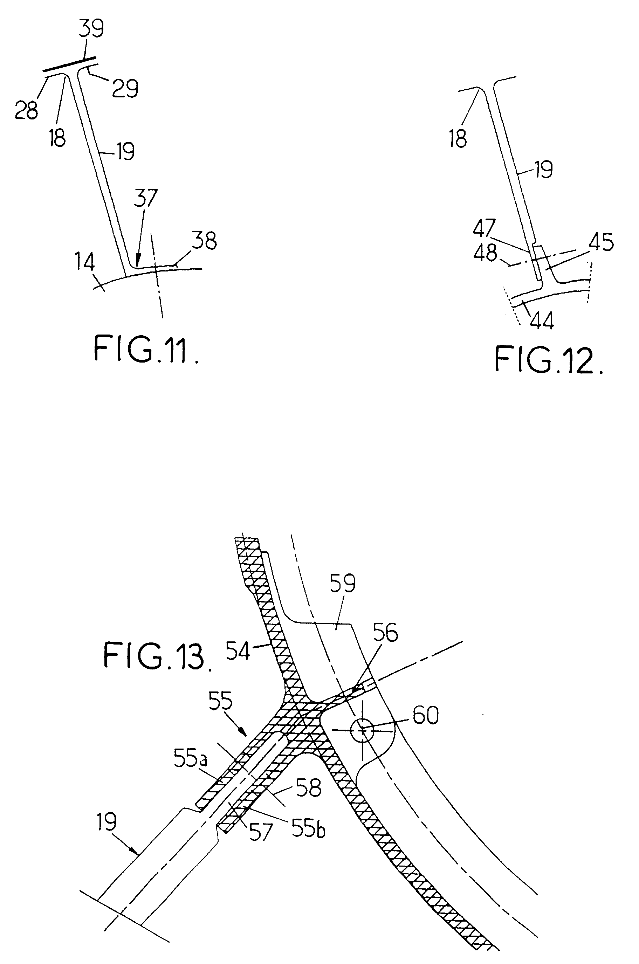

Mais, pour un redresseur 8 à aubes rivées sur le corps central 14, comme le rivetage du pied 17 de l'aube 9 des figures 5 à 7 est délicat en raison de l'inclinaison ν de l'aube sur la direction radiale, et que l'introduction des efforts dans l'aube 9 est également délicate en raison du "dépliage" ou de "l'ouverture" du pied d'aube 17 pour former les deux pattes de fixation 25 et 26, on utilise de préférence une aube telle que celle représentée schématiquement sur la figure 11.

Dans cet exemple, le pied d'aube 37 comporte une seule patte de fixation 38 transversale et d'un seul côté de la partie courante 19 de l'aube, et cette patte 38 est constituée par l'empilement des prolongements des couches de fibres des revêtements stratifiés d'extrados et d'intrados et des couches de fibres des empilements complémentaires tels que précédemment décrits, ainsi que d'une couche de fibres de verre dans la zone d'appui et de fixation contre le corps central 14.

Une autre différence par rapport à l'exemple des figures 5 à 7 est qu'il est prévu, entre les deux pattes de fixation stratifiées et transversales 28 et 29, s'étendant en sens opposé l'une de l'autre au bout d'aube 18, une semelle de fermeture 39 stratifiée, constituée par la superposition d'un pli de tissu de fibres de carbone, vers l'intérieur de l'aube, et de deux plis de tissu de fibres de verre vers l'extérieur, la chaîne ou la trame des plis de tissu étant orientée selon la direction transversale des pattes 28 et 29.

La figure 12 représente schématiquement un autre exemple d'aube performante sur le plan de la maintenance, car interchangeable, et sur le plan mécanique, car assurant une meilleure introduction des efforts en raison du mode de reprise du pied d'aube 47 sur le corps central 44. En effet, la seule différence principale par rapport aux exemples précédents est que le pied d'aube 47 se présente sous la forme d'une unique patte de fixation stratifiée dans le prolongement longitudinal de la partie courante 19 de l'aube, et constituée par la superposition de prolongements des revêtements stratifiés d'extrados et d'intrados de cette partie courante, avec une couche de fibres de verre de protection sur une face de la patte 47 qui est fixée de manière amovible par un ensemble vis-écrou schématisé en 48, en appui simple sur une patte de reprise 45, usinée en saillie vers l'extérieur sur la paroi annulaire du corps central métallique 44.

La figure 13 représente partiellement un autre exemple d'aube qui, comme celle de la figure 12, comporte un pied d'aube 57 agencé en patte stratifiée réalisée de la même façon que dans les exemples précédents et dans le prolongement longitudinal de la partie courante 19 de l'aube. Le drapage et le moulage de l'aube sont donc simplifiés, du fait de la simplification de la définition du pied de pale 57 ou 47 de l'exemple précédent. L'aube de la figure 13 se distingue essentiellement de celle de la figure 12 par le fait que sa patte de fixation du pied d'aube 57 est introduite et retenue dans une chape 55 en saillie vers l'extérieur sur la paroi annulaire du corps central 54. Cette chape 55 assure une introduction et un passage des efforts plus homogènes dans l'aube. La chape 55 est telle que l'une de ses pattes 55a est plus mince que l'autre 55b. La patte la plus mince 55a assure le serrage de l'aube par un ensemble vis-écrou représenté schématiquement par le trait d'axe 58, tandis que la patte la plus épaisse 55b permet la transmission des efforts avec une plus grande rigidité.

De plus, dans cet exemple, le corps central 54 n'est plus métallique mais moulé par compression à chaud d'un matériau composite constitué de fibres courtes de verre noyées dans une matrice thermodurcissable de type vinylester, le corps de redresseur 54 étant réalisé en une seule pièce après un cycle de polymérisation d'une durée de 3 mn par exemple à une température de 120°C, sous une pression de compactage de l'ordre de 10 MPa. Afin de rigidifier ce corps moulé 54, ce dernier présente, sensiblement au niveau de la base de la chape 55, une nervure de rigidification 56, en saillie radialement vers l'intérieur de la paroi annulaire du corps 54 et s'étendant axialement entre une bride 59 en saillie radiale vers l'intérieur, à l'extrémité amont du corps 54, et percée de trous 60 de reprise par vissage de la boîte de transmission auxiliaire, et un bord tombé de rigidification, également en saillie radiale vers l'intérieur de la paroi annulaire du corps 54, mais à son extrémité aval. Ainsi, chaque nervure 56 assure une rigidité convenable du corps de redresseur 54 au niveau du raccordement d'une chape correspondante 55 à ce corps 54, c'est-à-dire à l'endroit de passage des efforts vers l'aube correspondante.

Dans les différents exemples décrits ci-dessus, les aubes, chacune moulée par injection selon le procédé "RTM", sont individuellement rapportées sur un corps de redresseur métallique (usiné en alliage d'aluminium par exemple) ou composite (moulé par compression en résine armée de fibres courtes), la liaison entre chaque aube et le corps de redresseur pouvant s'effectuer par des ensembles vis-écrou assurant un serrage correct ainsi qu'une possibilité de démontage pour une éventuelle opération de maintenance (changement d'aube). Lors du montage de l'ensemble redresseur dans la veine 6, on assure le positionnement correct du redresseur 8 par un réglage des cales 33 au niveau des inserts 31 (voir figure 4).

Toutefois, toute aube composite dont la partie courante a ses parties d'extrados et d'intrados comprenant chacune au moins une couche de fibres de renfort rigidifiées par une résine synthétique d'agglomération, peut être moulée par le procédé de l'invention.

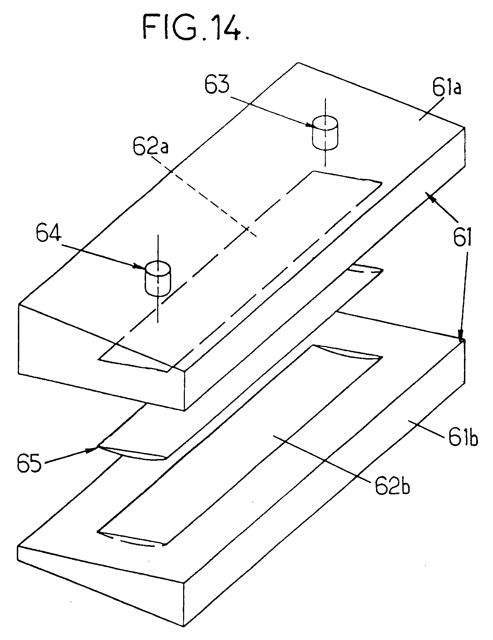

Le moulage par injection des aubes selon le procédé RTM est décrit ci-dessous en référence à la figure 14, représentant schématiquement un moule d'injection de structure bien connue. Ce moule 61 comporte essentiellement deux demi-moules supérieur 61a et inférieur 61b, présentant chacun l'une de deux empreintes internes 62a et 62b qui sont complémentaires l'une de l'autre pour former une empreinte correspondant au profil aérodynamique de la partie courante de l'aube, ainsi qu'au profil de son pied et de son bout, lorsque les deux demi-moules 61a et 61b sont fermés l'un sur l'autre, par des moyens de serrage et d'étanchéité non décrits car bien connus, le centrage étant assuré par des pions centreurs, également bien connus (non représentés), et le moule comporte une prise de vide 63, débouchant dans l'empreinte du moule et reliée par un raccord à une pompe à vide (non représentée) ainsi qu'une prise d'injection de résine 64 débouchant également dans l'empreinte du moule. De façon bien connue, l'empreinte 62a du demi-moule supérieur 61a peut correspondre à la forme de l'extrados de l'aube dans son pied, son bout et sa partie courante, et, de même, l'empreinte 62b du demi-moule inférieur 61b peut correspondre à la forme de l'intrados de l'aube, dans ses trois parties, de sorte que le plan de joint des demi-moules 61a et 61b passe par les bords d'attaque et de fuite de l'aube.

L'utilisation d'une résine d'injection de la classe dite "à 180°C" conduit à utiliser un moule 61 métallique, par exemple usiné en alliage d'aluminium. Par contre, si la résine d'injection utilisée est de la classe dite "à 120°C", le moule 61 peut être réalisé en matériau composite, à l'aide d'une résine de coulée chargée de particules métalliques. Ce moule en matériau composite peut être obtenu par surmoulage d'un modèle d'aube, par exemple métallique.

La fabrication d'une aube commence par la réalisation d'une préforme 65 réalisée par drapage de la ou des couches préparées, par exemple précoupées, de fibres de renfort de nature, d'orientation, et de dimensions prédéterminées, comme décrit ci-dessus, autour du noyau 20 de mousse.

Ce noyau 20 est tout d'abord préparé par compression d'un pain de mousse dans un moule lui donnant sa conformation et un compactage superficiel. Ce moule du noyau peut être un moule spécifique, également de structure classique, en deux parties à empreintes internes complémentaires, les deux parties étant serrées l'une contre l'autre et autour du pain de mousse, jusqu'à venir en butée l'une contre l'autre par le plan de joint. En variante, le noyau de mousse 20 peut également être formé par compression d'un pain de mousse dans le moule d'injection, dans lequel les empreintes 62a et 62b auront préalablement été garnies de maquettes, par exemple en plomb, à la forme et aux dimensions des revêtements d'intrados et d'extrados devant entourer le noyau. La densification superficielle du noyau 20 peut être assurée par une compression à froid du pain de mousse, auquel cas il convient de rendre ensuite la surface du noyau étanche à la résine utilisée, pour éviter la migration de cette dernière dans le noyau en mousse. Ceci est assuré en entourant le noyau d'un film d'un matériau thermorétractable soudé et mis en forme autour du noyau par soufflage d'air chaud.

Mais l'étanchéité du noyau vis-à-vis de la résine peut être obtenue simultanément à la densification superficielle du noyau par un compactage à chaud de ce dernier, qui a pour effet de fermer les cellules de la mousse du noyau à sa surface.

Le noyau de mousse étant préparé, il est gainé de fibres de renfort, essentiellement sèches, par exemple en drapant autour du noyau les tresses de fibres, nappes de fibres et plis de tissu de fibres préalablement découpés aux dimensions nécessaires, lorsque le drapage s'effectue avec des couches de fibres de nature et d'orientation prédéfinies, conformément aux exemples décrits ci-dessus. On réalise ainsi une préforme 65 de l'aube par la mise en place autour du noyau de mousse 20 de la ou des couches de fibres de renfort constituant les revêtements d'extrados et d'intrados ainsi que les parties stratifiées des pied et bout d'aube, avec leurs pattes de fixation. Le maintien en place de la ou des différentes couches de fibres du drapage est assuré par un léger encollage à l'aide d'une laque en aérosol, ou par l'utilisation d'au moins une couche de fibres de renfort légèrement enduite d'un liant époxyde thermoréversible maintenant les fibres d'une même couche de renfort entre elles. La préforme d'aube 65 constituée du noyau entouré de la gaine de fibres de renfort formée de la ou des couches de fibres que comprend l'aube achevée, est ensuite déposée dans le moule d'injection 61 ouvert, dont les surfaces des empreintes 62a et 62b des deux parties de moule 61a et 61b ont été préalablement préparées pour assurer un bon démoulage. Cette préparation peut consister à recouvrir chacune des empreintes 62a et 62b d'un film de PTFE adhésif, tel que celui commercialisé sous la marque NYTOFLON, le plan de joint des deux demi-moules 61a et 61b étant recouvert par exemple d'un agent démoulant du type commercialisé sous la dénomination FREEKOTE 700. Le moule 61 est ensuite fermé étanche autour de la préforme 65, et il est mis sous vide par la prise 63. Le moule 61 est ensuite mis en étuve pour un chauffage jusqu'à atteindre au coeur du moule 61 une température correspondant à la température pour laquelle la résine d'injection utilisée sera liquide et de viscosité la plus faible. Le moule est ensuite sorti de l'étuve et l'injection est pratiquée par la prise 64, sous pression, après préparation de la résine de la matrice (mélange et dégazage). Avant son injection dans le moule 61 par la prise 64, la résine peut être réchauffée dans un échangeur thermique approprié, et, éventuellement, son réchauffage pour atteindre une viscosité suffisamment faible pour son injection peut être achevé dans une gorge ménagée dans le moule 61 et servant à recevoir la résine avant sa migration à travers les couches de fibres de la préforme 65. Le moule 61 peut être posé verticalement lors de l'injection de la résine, la prise d'injection 64 étant disposée vers le bas et la prise de vide 63 vers le haut, de sorte que la résine assure une bonne imprégnation des couches de fibres de la préforme 65 de bas en haut, en chassant les particules d'air résiduel de la préforme 65, pour obtenir une absence de porosité dans l'aube injectée. Après injection, le moule 61 contenant la préforme 65 imprégnée de résine injectée est disposé à plat en étuve ou sous presse à plateau chauffant pour la phase de polymérisation. Cette phase est suivie d'une phase de refroidissement du moule et de son contenu, puis de l'ouverture du moule et du démoulage de l'aube.

Au cours de la phase de polymérisation de la résine, il se produit une légère expansion du noyau de mousse 20 superficiellement compacté, ce qui assure une pression de compactage interne suffisante du drapage de la ou des couches de fibres de renfort. Pour une résine d'injection du type dit à 120°C, la température du moule en début d'injection est comprise entre environ 62°C et environ 59°C, et en fin d'injection entre environ 50°C et 55°C, afin de maintenir la résine à une température de l'ordre de 60°C pour laquelle elle est liquide et présente une faible viscosité, non supérieure à 100 mPa.s. Pour une dépression de l'ordre de 10⁵ Pa dans le moule, la pression d'injection de la résine, au début de la phase d'injection, est de l'ordre de 0,75 x 10⁵ Pa à 10⁵ Pa, et en fin d'injection, de l'ordre de 2,5 x 10⁵ Pa à 3 x 10⁵ Pa. Le cycle de polymérisation peut être d'une durée de 1 h 30 à 80°C, et le refroidissement lent à atmosphère ambiante.

En outre, pour assurer une protection correcte contre la foudre et un écoulement des charges électriques statiques, chaque aube incorpore des éléments métalliques électriquement conducteurs, de sorte à assurer une continuité électrique du corps central 14 et de la boîte de transmission arrière qu'il renferme jusqu'aux inserts dans la paroi annulaire de la veine 6. Ces éléments métalliques électriquement conducteurs peuvent être un clinquant de cuivre ou un grillage de bronze ou de cuivre incorporé dans le nappage et s'étendant jusque dans le pied et dans le bout d'aube et les pattes de fixation de ces parties, jusqu'aux orifices de passage des ensembles vis-écrous de fixation de l'aube.

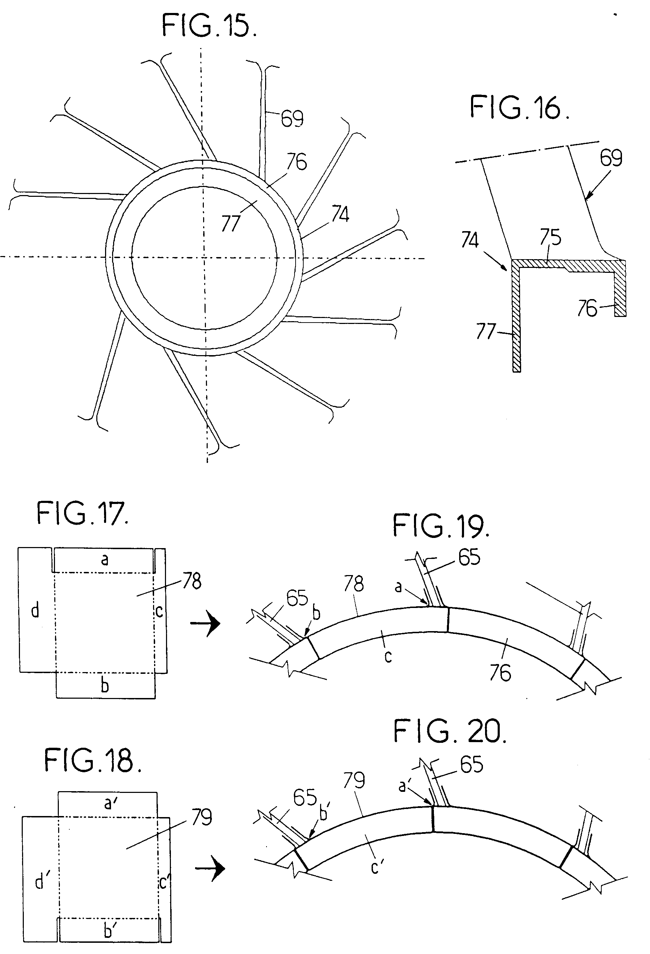

La figure 15 représente un autre exemple dans lequel les dix aubes 69 et le corps central annulaire 74 du redresseur sont d'une seule pièce en matériaux composites et moulée en une seule injection de résine selon le procédé RTM. La partie courante et le bout de chaque aube 69 sont identiques aux parties correspondantes des aubes des exemples précédents, mais le pied de chaque aube 69 est dans le prolongement longitudinal de l'aube correspondante et se trouve lié au corps central 74 par des couches de liaison en fibres de renfort qui sont de même nature que les couches de fibres de renfort des parties d'intrados et d'extrados des aubes 69, et agglomérées par la même résine, utilisée pour l'unique étape d'injection. Le corps central 74 a une structure stratifiée constituée d'un empilement de couches de fibres de renfort également de même nature ou d'une nature similaire à celle des parties d'intrados et d'extrados des aubes 69, et agglomérées par la même résine d'injection.

La figure 16 montre que chaque aube 69 se raccorde sur toute la corde de son pied sur la paroi latérale 75 du corps central 74, cette paroi 75 étant plus épaisse dans sa partie amont prolongée, à son extrémité axiale amont, par une bride radiale interne 76 de reprise de la boîte de transmission arrière, tandis que la partie aval de la paroi latérale 75 est plus mince et se prolonge, à son extrémité axiale aval, par un bord tombé radial interne 77 de même épaisseur, donc plus mince que la bride amont 76.

Dans un premier exemple, la section la plus mince de la paroi annulaire 75 et du bord tombé 77 correspond à un empilement de dix plis de tissu de fibres de carbone à chaîne orientée selon la direction circonférentielle du corps central 74, les quatre plis internes comme les quatre externes de l'empilement étant en tissu équilibré, et dans la partie la plus épaisse du corps 74, correspondant à la bride 76 de reprise de la boîte de transmission arrière et à la partie amont de la paroi latérale 75, cet empilement est complété par quatre plis de tissu de fibres de carbone ayant la même orientation, les deux plis externes de cet empilement complémentaire étant en tissu équilibré. Au niveau du pied de chaque aube (69), le drapage du corps de redresseur 74 comprend de plus deux tresses superposées et à 60° de fibres unidirectionnelles de carbone et disposées sous les quatre plis externes de tissu équilibré.

Selon un second exemple de corps de redresseur 74, la section dans sa partie courante la plus mince et dans le bord tombé aval 77 est donnée par un empilement, de l'intérieur vers l'extérieur, d'un pli de tissu de carbone équilibré et à 0° (à chaîne orientée selon la direction circonférentielle du corps 74) puis de deux nappes superposées de fibres unidirectionnelles de carbone orientées dans la même direction, puis de quatre plis superposés de tissu de fibres de carbone, dont les deux plis centraux sont en tissu équilibré, avec la même orientation pour ces quatre plis, puis à nouveau de deux nappes superposées de fibres unidirectionnelles de carbone avec la même orientation, et enfin un pli externe de tissu équilibré de carbone à 0°. Au niveau de la bride 76 et de la partie amont plus épaisse de la paroi latérale 75, cet empilement est complété, vers l'extérieur, et comme dans l'exemple précédent, par quatre plis superposés de tissu de fibres de carbone orientés à 0°, dont deux plis en tissu équilibré, et, également comme dans l'exemple précédent, au niveau de chaque pied d'aube, deux tresses superposées et à 60° de fibres de carbone unidirectionnelles sont intégrées avant les quatre dernières couches de l'empilement de base.

La fabrication de cet ensemble redresseur monocorps comporte la réalisation d'une préforme 65 telle que décrite ci-dessus pour chacune des aubes 69, par gainage d'un noyau de mousse avec la ou les couches de fibres de renfort de chaque aube, ainsi que la réalisation d'une préforme du corps avec un nappage de couches de fibres de renfort par exemple selon l'un des deux exemples précités. Le procédé de fabrication comporte donc la formation et le compactage des noyaux de mousse pour les aubes 69, le drapage des aubes sur ces noyaux compactés pour former des préformes d'aubes 65, le drapage des couches de fibres de renfort pour former la préforme du corps de redresseur 74 autour d'un outillage qui sera incorporé dans le moule d'injection, puis la mise en place des différentes préformes des aubes 69 et du corps central 74 dans le moule d'injection, et le drapage de plis de liaison entre les préformes des aubes et celle du corps, puis la fermeture étanche du moule d'injection, sa mise sous vide et l'injection d'une résine liquide sous pression, l'injection étant sensiblement centrale alors que le vide est fait dans les empreintes du moule à partir des bouts d'aube, cette étape d'injection assurant une bonne migration de la résine pour l'imprégnation de toutes les couches de fibres de renfort des différentes préformes, et étant suivie d'un cycle de polymérisation, lui-même suivi d'une étape de refroidissement et enfin du démoulage.

Concernant le drapage des plis de liaison entre les aubes 69 et le corps 74, les figures 17 et 18 représentent en plan deux plis qui peuvent être mis en place en successions alternatives pour assurer la continuité de la géométrie du redresseur monobloc et une bonne transmission des efforts entre les aubes 69 et le corps 74. Parallèlement, les figures 19 et 20 représentent schématiquement le mode de mise en place des plis respectivement des figures 17 et 18. Le pli 78 de tissu de fibres de carbone de la figure 17 a sa partie centrale qui s'applique contre la face latérale externe de la partie annulaire 75 de la préforme du corps 74, entre deux préformes d'aubes 65 consécutives, et ce pli 78 comporte un volet supérieur a et un volet inférieur b, qui sont rectangulaires et transversaux, et s'appliquent respectivement le premier par exemple contre l'intrados du pied d'une préforme 65 et le second contre l'extrados du pied d'une préforme 65 adjacente, et ce pli 78 comporte également deux volets latéraux c et d, qui sont rectangulaires et longitudinaux, le premier c d'une largeur égale à la dimension radiale de la bride 76, et le second d d'une largeur égale à la dimension radiale du bord tombé 77, et ces volets c et d sont repliés respectivement sur la bride 76 et sur le bord tombé 77 en s'étendant, à leurs extrémités situées sur les côtés du volet a, sensiblement jusqu'à l'extrados du pied de la préforme 65 contre l'intrados de laquelle le volet a est appliqué.

Le pli suivant 79 comporte également sa partie centrale appliquée contre la surface externe de la partie annulaire 75 de la préforme du corps 74, entre les deux mêmes préformes 65, et il présente deux volets a' et b' rectangulaires et transversaux, de mêmes dimensions que les volets a et b du pli 78, ainsi que deux volets latéraux c' et d', de mêmes dimensions que les volets c et d du pli 78, mais tels que les extrémités libres des volets c' et d' s'étendent de part et d'autre du volet b', et non de part et d'autre du volet a comme c'est le cas pour les extrémités des volets c et d du pli 78. La figure 20 montre que les volets a' et b' sont appliqués respectivement comme les volets a et b, et par-dessus ces derniers, et que les volets c' et d' sont repliés sur la bride 76 et le bord tombé 77, en recouvrant partiellement, avec un décalage en direction circonférentielle, les volets c et d du pli 78 précédent, les volets c' et d' s'étendant cette fois jusqu'au niveau de l'intrados de la préforme 65 contre l'extrados de laquelle les volets b et b' sont appliqués.

Avec un tel drapage, on obtient pour le corps central 74 comme pour les aubes 69 les mêmes rigidités que pour un redresseur à aubes métalliques rapportées sur un corps central métallique, mais en bénéficiant d'un gain appréciable en masse, supérieur à 20 %.

## Revendications

1. Aube de redresseur, pour dispositif anti-couple caréné d'aéronef à voilure tournante, tel qu'un hélicoptère,
ladite aube (9) étant destinée à être intégrée dans un stator redresseur (8), lui-même fixé dans une veine (6) d'axe (X-X) sensiblement transversal à l'axe longitudinal de l'aéronef et traversant une partie arrière (2) de l'aéronef dans laquelle ladite veine (6) est délimitée par une paroi annulaire (6a), veine (6) dans laquelle est monté sensiblement coaxialement un rotor (7) qui est entraîné en rotation par un mécanisme (14a) fixé sensiblement coaxialement dans la veine (6), de sorte que la rotation du rotor (7) engendre un flux d'air dans la veine (6), le stator redresseur (8) étant fixé dans la veine (6) en aval du rotor (7), par rapport au sens du flux d'air, et comportant en outre un corps central annulaire (14) entourant le mécanisme (14a) d'entraînement en rotation,
ladite aube (9) présentant une partie courante (19) à profil aérodynamique qui redresse le flux d'air en aval du rotor (7) vers l'axe (X-X) de la veine (6), et qui s'étend entre un pied d'aube (17 ; 17' ; 37 ; 47 ; 57) et un bout d'aube (18) aux extrémités de la partie courante (19), l'aube (9) étant fixée par ledit pied (17 ; 17' ; 37 ; 47 ; 57) et ledit bout (18) respectivement au corps central (14) et à la paroi annulaire (6a) de la veine (6), de façon à supporter le mécanisme (14a) d'entraînement en rotation et le rotor (7) dans la veine (6),
caactérisée en ce que l'aube est composite et sa partie courante (19) présente des parties d'extrados (21) et d'intrados (22) stratifiées et comprenant chacune un empilement d'au moins trois couches de fibres de renfort, essentiellement de carbone, rigidifiées par une résine synthétique d'agglomération thermodurcissable, l'une au moins des couches interne et externe de l'empilement comprenant deux ensembles de fibres essentiellement unidirectionnelles et orientés d'environ 30° à environ 70° l'un par rapport à l'autre et sensiblement symétriquement par rapport à l'axe longitudinal de l'aube (9) selon son envergure, et la couche intermédiaire comprend un ensemble de fibres essentiellement unidirectionnelles orientées sensiblement selon ledit axe longitudinal de l'aube (9), l'un au moins des pieds (17 ; 17' ; 37 ; 47 ; 57) et bout d'aube (18) présentant au moins une patte stratifiée (25, 26, 28, 29) de fixation comprenant un empilement de prolongements des couches de fibres de renfort de la partie d'intrados (22) et/ou d'extrados (21) de la partie courante (19) avec au moins un empilement complémentaire d'une couche centrale de fibres de renfort essentiellement unidirectionnelles, orientées sensiblement parallèlement à celles de ladite couche intermédiaire dans le pied (17 ; 17'; 37; 47; 57) ou le bout (18) d'aube correspondant, et entre deux plis de tissu équilibré de fibres de renfort dont la chaîne est orientée sensiblement parallèlement aux fibres unidirectionnelles de ladite couche centrale.

2. Aube selon la revendication 1, caractérisée en ce que ses parties stratifiées (21, 22, 23, 24, 25, 26, 28, 29) présentent un taux de fibres de renfort d'environ 40 % à environ 60 % en volume.

3. Aube selon l'une des revendications 1 et 2, caractérisée en ce que la couche interne de l'empilement a une structure choisie parmi les structures suivantes : une nappe de fibres de renfort essentiellement unidirectionnelles orientées sensiblement selon l'axe longitudinal de l'aube (9), et au moins un pli de tissu constitué sensiblement à 90 % de fibres de carbone selon la chaîne orientée sensiblement selon l'axe longitudinal de l'aube (9) et sensiblement à 10 % de fibres de verre ou de carbone selon la trame du tissu.

4. Aube selon l'une des revendications 1 à 3, caractérisée en ce que l'une au moins des couches interne et externe des parties d'extrados (21) et d'intrados (22) stratifiées de sa partie courante (19) a une structure choisie parmi les structures suivantes : une tresse longitudinale de fibres de carbone orientées d'environ 30° à environ 70° les unes par rapport aux autres et sensiblement symétriquement par rapport à l'axe longitudinal de l'aube (9), et au moins deux nappes superposées de libres de carbone essentiellement unidirectionnelles et orientées sensiblement symétriquement d'environ ± 15° à environ ± 35° par rapport à l'axe longitudinal de l'aube (9).

5. Aube selon l'une quelconque des revendications 1 à 4, caractérisée en ce que la couche intermédiaire des parties d'extrados (21) et d'intrados (22) stratifiées de la partie courante (19) a une structure choisie parmi les structures suivantes : une tresse de libres de renfort essentiellement unidirectionnelles orientées selon l'axe longitudinal de l'aube (9), une superposition d'au moins deux nappes de libres de renfort essentiellement unidirectionnelles orientées selon l'axe longitudinal de l'aube (9), et une superposition d'au moins deux plis d'au moins un tissu constitué sensiblement à 90 % de libres de carbone selon la chaîne orientée sensiblement selon l'axe longitudinal de l'aube (9) et sensiblement à 10% de libres de verre ou de carbone selon la trame du tissu.

6. Aube selon l'une quelconque des revendications 1 à 5, caractérisée en ce ladite couche centrale de libres dudit empilement complémentaire au niveau de l'un au moins des pied (17) et bout (18) d'aube comprend une structure choisie parmi les structures suivantes : au moins une nappe de fibres unidirectionnelles, et au moins un pli de tissu constitué sensiblement à 90 % de libres de carbone selon la chaîne et à 10 % de libres de verre ou de carbone selon la trame.

7. Aube selon l'une quelconque des revendications 1 à 6, caractérisée en ce qu'au niveau du pied (17) de l'aube (9), ledit empilement complémentaire comprend un empilement d'au moins deux plis de tissu de libres de renfort dont la chaîne ou la trame est orientée sensiblement parallélement à l'axe longitudinal de l'aube (9), et d'au moins deux plis croisés de tissu de fibres de renfort dont la chaîne ou la trame est orientée sensiblement à ± 45° sur l'axe longitudinal de l'aube (9).

8. Aube selon l'une quelconque des revendications 1 à 7, caractérisée en ce que l'empilement du pied (17) et/ou du bout (18) de l'aube (9) comprend au moins une couche de fibres de verre, dans les zones venant en contact avec respectivement le corps central (14) et la paroi annulaire (6a) de la veine (6).

9. Aube selon l'une quelconque des revendications 1 à 8, caractérisée en ce que l'un au moins des bout (18) et pied (17) d'aube (9) comporte, entre deux pattes de fixation stratifiées transversales (28, 29) s'étendant en sens opposé l'une de l'autre, une semelle de fermeture (39) stratifiée comprenant un empilement d'au moins un pli de tissu de fibres de renfort, vers l'intérieur de l'aube (9), et d'au moins un pli de tissu de fibres de verre, vers l'extérieur de l'aube (9), la chaîne ou la trame des plis de tissu étant orientée sensiblement selon la direction transversale des pattes de fixation (28, 29).

10. Aube selon l'une quelconque des revendications 1 à 9, caractérisée en ce qu'au moins une patte de fixation (25, 26, 28, 29) du pied (17) et/ou du bout (18) d'aube est cambrée par rapport à la partie d'extrados (21) ou d'intrados (22) de l'aube (19) qu'elle prolonge et s'étend au-dessus ou respectivement au-dessous de ladite partie d'extrados (21) ou respectivement d'intrados (22), en étant cintrée et/ou inclinée de manière correspondant sensiblement à la courbure d'une surface du corps central (14) ou de la paroi annulaire (6a) de veine sur laquelle elle est destinée à être fixée, et/ou de sorte que l'aube (9) est inclinée sur la direction radiale par rapport à l'axe (X-X) de la veine (6) et/ou en flèche de son pied (17) vers son bout d'aube (18) et de l'amont vers l'aval dans la veine (6).

11. Aube selon la revendication 10, caractérisée en ce qu'au moins une patte de fixation (25, 26) du pied d'aube (17') présente une partie (34) repliée sensiblement radialement par rapport à l'axe (X-X) de la veine (6) pour l'appui et la fixation contre une bride radiale de fixation du corps central (14).

12. Aube selon l'une quelconque des revendications 1 à 11, caractérisée en ce que le pied d'aube (37) présente une seule patte de fixation (38) s'étendant sensiblement transversalement d'un seul côté de l'aube, et constituée d'un empilement comprenant des prolongements des parties stratifiées d'extrados et d'intrados de la partie courante (19) de l'aube.

13. Aube selon l'une quelconque des revendications 1 à 10, caractérisée en ce que le pied d'aube (47) présente une patte de fixation s'étendant sensiblement dans le prolongement longitudinal de la partie courante (19) et destinée à être fixée (48), de préférence de manière amovible, en appui simple contre une patte de reprise (45) en saillie vers l'extérieur sur le corps central (44) du redresseur.

14. Aube selon la revendication 13, caractérisée en ce que la patte de reprise (55a) est l'une des deux pattes (55a, 55b) d'une chape de reprise (55) en saillie vers l'extérieur sur le corps central (54) et dans laquelle la patte de fixation (57) du pied d'aube est engagée et retenue (58).

15. Aube selon l'une quelconque des revendications 10 à 14, caractérisée en ce que la ou les pattes de fixation (28, 29) du bout d'aube (18) se fixent de manière amovible par vissage (30) sur un insert (31) monté dans la paroi annulaire (6a) de veine (6) et la ou les pattes de fixation (25, 26) du pied d'aube (17) se fixent par rivetage ou vissage (27) sur le corps central (14).

16. Aube selon l'une quelconque des revendications 1 à 15, caractérisée en ce qu'elle est pleine.

17. Aube selon l'une quelconque des revendications 1 à 15, caractérisée en ce qu'elle est creuse.

18. Aube selon l'une quelconque des revendications 1 à 15, caractérisée en ce que les parties d'extrados (21) et d'intrados (22) constituent des revêtements stratifiés formant une coque rigide entourant un noyau (20) de matière synthétique légère, alvéolaire ou en mousse, ayant de préférence sa surface externe compactée et/ou rendue étanche vis-à-vis de la résine d'agglomération des revêtements stratifiés (21, 22).

19. Redresseur, pour un dispositif anti-couple caréné d'aéronef à voilure tournante, tel qu'un hélicoptère,
ledit redresseur (8) étant destiné à être fixé dans une veine (6) d'axe (X-X) sensiblement transversal à l'axe longitudinal de l'aéronef et traversant une partie arrière (2) de l'aéronef dans laquelle ladite veine (6) est délimitée par une paroi annulaire (6a), veine (6) dans laquelle est monté sensiblement coaxialement un rotor (7) qui est entraîné en rotation par un mécanisme (14a) fixé sensiblement coaxialement dans la veine (6), de sorte que la rotation du rotor (7) engendre un flux d'air dans la veine (6),
ledit redresseur (8) étant fixé dans la veine (6) en aval du rotor (7), par rapport au sens du flux d'air, et comportant un corps central annulaire (44 ; 54 ; 74) entourant le mécanisme (14a) d'entraînement en rotation, ainsi que des aubes (9 ; 69) présentant chacune une partie courante (19) à profil aérodynamique qui redresse le flux d'air en aval du rotor (7) vers l'axe (X-) de la veine (6), et qui s'étend entre un pied d'aube (17 ; 47 ; 57) et un bout d'aube (18) aux extrémités de la partie courante (19), l'aube (9 ; 69) étant fixée par ledit pied (17 ; 47 ; 57) et ledit bout (18) respectivement au corps central (44; 54 ; 74) et à la paroi annulaire (6a) de la veine (6), de façon à supporter le mécanisme (14a) d'entraînement en rotation et le rotor (7) dans la veine (6),
caractérisé en ce que le corps central annulaire (44 ; 54 ; 74) du redresseur (8) présente une paroi latérale (75) de forme cylindrique ou cylindro-conique à surface externe sensiblement de révolution axiale, à laquelle les aubes (9; 69) composites à parties d'extrados (21) et d'intrados (22) de leur partie courante comprenant chacune au moins une couche de fibres de renfort rigidifiées par une résine synthétique d'agglomération sont reliées par leur pied (17; 47 ; 57), ainsi qu'une bride (76) en saillie radiale vers l'intérieur, de préférence à l'une de ses extrémités axiales, pour la liaison au mécanisme (14a) d'entraînement en rotation, et un bord tombé de rigidification (77) en saillie radiale vers l'intérieur, de préférence à l'autre extrémité axiale.

20. Redresseur selon la revendication 19, caractérisé en ce que chaque aube (9) est individuellement rapportée, de manière amovible, sur le corps central (44 ; 54).

21. Redresseur selon la revendication 20, caractérisé en ce que le corps central (44) est métallique et présente des pattes de reprise (45) en saillie vers l'extérieur de sa paroi latérale et sur chacune desquelles est fixé le pied (47) d'une aube présentant une patte de fixation sensiblement dans le prolongement de sa partie courante.

22. Redresseur selon la revendication 20, caractérisé en ce que le corps central (54) est réalisé en un matériau composite moulé par compression à chaud et comprenant des fibres courtes de renfort, de préférence en verre, noyées dans une matrice thermodurcissable, de préférence de type vinylester, et présente, pour chaque aube, une chape (55) en saillie vers l'extérieur de sa paroi latérale annulaire et dans laquelle le pied (57) de l'aube est retenu (58), ainsi qu'une nervure (56) de rigidification en saillie vers l'intérieur de ladite paroi, sensiblement au niveau de ladite chape (55).

23. Redresseur selon la revendication 19, caractérisé en ce que le corps central (74) et les aubes (69) sont d'une seule pièce en matériau composite, le pied de chaque aube (69) prolongeant longitudinalement l'aube (69) correspondante et étant lié au corps central (74), comprenant un empilement de couches de fibres de renfort sensiblement de même nature que celles des aubes (69) et agglomérées par la même résine, par des couches de liaison (78, 79) de fibres de renfort également sensiblement de même nature que celles des aubes (69) et également agglomérées par la même résine.

24. Procédé de fabrication d'une aube (9) de redresseur (8), l'aube (9) étant composite et à parties d'extrados (21) et d'intrados (22) de sa partie courante comprenant chacune au moins une couche de fibres de renfort rigidifiées par une résine synthétique d'agglomération, caractérisé en ce qu'il comprend les étapes consistant à mouler l'aube (9) par injection, dans un moule (61) fermé et sous dépression, de ladite résine synthétique, qui est une résine d'injection thermodurcissable sensiblement liquide dans une préforme (65) disposée dans le moule (61) et préalablement constituée à l'aide de couches de fibres de renfort, essentiellement en carbone, sensiblement à la forme de l'aube (9).

25. Procédé selon la revendication 24, caractérisé en ce qu'il comprend les étapes consistant à :
- préparer l'ensemble des plis de tissu et/ou nappes et/ou tresses de fibres de renfort, essentiellement sèches, constituant les couches de fibres, aux dimensions nécessaires à la formation de l'aube (9),
- draper les éléments préparés selon un drapage défini pour la formation de l'aube (9), autour d'un noyau (20) de matière légère synthétique, préalablement formé, de façon à réaliser une préforme d'aube (65) à noyau (20) entouré d'une gaine de fibres de renfort,
- disposer la préforme (65) dans le moule d'injection (61), du type à au moins deux parties complémentaires (61a, 61b) à empreintes internes (62a, 62b) complémentaires correspondant à la forme de l'aube (9),
- fermer le moule (61) de manière étanche et le mettre en dépression,
- injecter sous pression dans le moule (61) une résine thermodurcissable à une température d'injection pour laquelle la résine est sensiblement liquide et de faible viscosité, de préférence non supérieure à 100 mPa.s, et assurer une imprégnation de toutes les couches de fibres de renfort,
- effectuer un cycle de polymérisation de la résine, puis, après refroidissement du moule (61) et de son contenu,
- ouvrir le moule (61) et démouler l'aube (9).

26. Procédé selon la revendication 25, caractérisé en ce qu'il comprend également une étape d'enduction d'un liant époxyde thermoréversible sur les plis de tissu et/ou nappes et/ou tresses de fibres de renfort du drapage.

27. Procédé selon l'une des revendications 25 et 26, caractérisé en ce qu'il comprend l'étape consistant à former le noyau (20) en comprimant un pain de mousse dans un moule et en le densifiant superficiellement.

28. Procédé selon la revendication 27, caractérisé en ce qu'il comprend l'étape consistant à rendre la surface externe du noyau (20) étanche à la résine d'injection avant le drapage.

29. Procédé selon la revendication 28, caractérisé en ce qu'il consiste à rendre la surface du noyau (20) étanche à la résine par l'application autour du noyau (20) d'un revêtement thermorétractable soudé au noyau (20) puis thermoformé.

30. Procédé selon la revendication 28, caractérisé en ce qu'il consiste à rendre la surface du noyau (20) étanche à la résine par densification superficielle à chaud du pain de mousse lors de sa compression.

31. Procédé de fabrication d'un redresseur (8), dont le corps central annulaire (74) et les aubes (69) sont d'une seule pièce en matériau composite, caractérisé en ce qu'il comprend les étapes consistant à :
- compacter un noyau (20) de matière synthétique légère alvéolaire ou en mousse pour chacune des aubes (69) du redresseur,
- réaliser une préforme (65) pour chaque aube (69) en drapant les couches de fibres de renfort, préalablement préparées aux dimensions nécessaires, sur le noyau (20) correspondant,
- réaliser une préforme du corps central (74) de redresseur par drapage et empilement des différentes couches de fibres de renfort, préalablement préparées, qu'il comporte,
- mettre en place les préformes (65) des aubes (69) et la préforme du corps de redresseur (74) dans un moule d'injection,
- draper, dans le moule d'injection, des couches de fibres de renfort de liaison (78, 79) entre les préformes (65) des aubes et du corps de redresseur (74),
- fermer le moule de manière étanche, le mettre en dépression, de préférence par le bout des aubes, et injecter une résine thermodurcissable à une température d'injection telle qu'elle présente une faible viscosité et est sensiblement liquide, puis
- assurer un cycle de polymérisation et enfin démouler le redresseur (8).

## Claims

1. Flow-straightener vane, for a ducted counter-torque device of a rotary-wing aircraft, such as a helicopter,
said vane (9) being intended to be integrated in a flow-straightening stator (8), itself fastened in a duct (6), of axis (X-X) substantially transversal to the longitudinal axis of the aircraft, and passing through a rear part (2) of the aircraft in which part said duct (6) is delimited by an annular wall (6a), in which duct (6) a rotor (7) is mounted substantially coaxially and driven in rotation by a mechanism (14a) fastened substantially coaxially in the duct (6), so that the rotation of the rotor (7) generates an airflow in the duct (6), the flow-straightening stator (8) being fastened in the duct (6) downstream of the rotor (7), with respect to the direction of airflow, and further including an annular central body (14) surrounding the rotational-drive mechanism (14a),
said vane (9) exhibiting a main vane section (19) with aerodynamic profile straightening out the airflow downstream of the rotor (7) towards the axis (X-X) of the duct (6), and extending between a vane root (17;17';37;47;57) and a vane tip (18) at the ends of the main vane section (19), the vane (9) being fastened via said root (17;17';37;47;57) and said tip (18) respectively to the central body (14) and to the annular duct-wall (6a), so as to support the rotational-drive mechanism (14a) and the rotor (7) in the duct (6),
characterized in that the vane is composite and its main vane section (19) exhibits laminated suction face (21) and pressure face (22) parts each comprising a pile of at least three layers of reinforcing fibres, essentially made of carbon, made rigid by a thermosetting synthetic agglomerating resin, at least one of the layers, either the internal one or the external one, of the pile comprising two sets of essentially unidirectional fibres orientated from approximately 30° to approximately 70° with respect to each other and substantially symmetrically with respect to the longitudinal axis of the vane (9) along its span, and the intermediate layer comprises a set of essentially unidirectional fibres orientated substantially along said longitudinal axis of the vane (9), at least one from among the vane root (17;17';37;47;57) and vane tip (18) exhibiting at least one laminated fastening tab (25, 26, 28, 29) comprising a pile of extensions of the layers of reinforcing fibres of the pressure face (22) part and/or suction face (21) part of the main vane section (19) with at least one complementary pile of a central layer of essentially unidirectional reinforcing fibres orientated substantially parallel to those of said intermediate layer in the corresponding vane root (17;17';37,47;57) or vane tip (18), and between two plies of balanced fabric of reinforcing fibres, the warp of which is orientated substantially parallel to the unidirectional fibres of said central layer.

2. Vane according to Claim 1, characterized in that its laminated parts (21, 22, 23, 24, 25, 26, 28, 29) exhibit a reinforcing fibre content from approximately 40% to approximately 60 % by volume.

3. Vane according to one of Claims 1 and 2, characterized in that the internal layer of the pile has a structure selected from the following structures: a web of essentially unidirectional reinforcing fibres which are orientated substantially along the longitudinal axis of the vane (9), and at least one ply of fabric substantially 90 % consisting of carbon fibres along the warp which is orientated substantially along the longitudinal axis of the vane (9), and substantially 10 % consisting of glass or carbon fibres along the weft of the fabric.

4. Vane according to one of Claims 1 to 3, characterized in that at least one of the internal and external layers of the laminated suction face part (21) and pressure face part (22) of its main vane section (19) has a structure selected from the following structures: a longitudinal braid of carbon fibres which are orientated from approximately 30° to approximately 70° with respect to one another and substantially symmetrically with respect to the longitudinal axis of the vane (9), and at least two superimposed webs of essentially unidirectional carbon fibres which are orientated substantially symmetrically from approximately ± 15° to approximately ± 35° with respect to the longitudinal axis of the vane (9).

5. Vane according to any one of Claims 1 to 4, characterized in that the intermediate layer of the laminated suction face part (21) and pressure face part (22) of the main vane section (19) has a structure selected from the following structures: a braid of essentially unidirectional reinforcing fibres which are orientated along the longitudinal axis of the vane (9), a superposition of at least two webs of essentially unidirectional reinforcing fibres which are orientated along the longitudinal axis of the vane (9), and a superposition of at least two plies of at least one fabric substantially 90 % consisting of carbon fibres along the warp which is orientated substantially along the longitudinal axis of the vane (9), and substantially 10% consisting of glass or carbon fibres along the weft of the fabric.

6. Vane according to any one of Claims 1 to 5, characterized in that said central layer of fibres of said complementary pile in the region of at least one from among the vane root (17) and vane tip (18) comprises a structure selected from the following structures: at least one web of unidirectional fibres, and at least one ply of fabric substantially 90 % consisting of carbon fibres along the warp and 10 % consisting of glass or carbon fibres along the weft.

7. Vane according to any one of Claims 1 to 6, characterized in that in the region of the root (17) of the vane (9), said complementary pile comprises a pile of at least two plies of fabric of reinforcing fibres, the warp or weft of which is orientated substantially parallel to the longitudinal axis of the vane (9), and of at least two crossed plies of fabric of reinforcing fibres, the warp or the weft of which is orientated substantially at ± 45° to the longitudinal axis of the vane (9).

8. Vane according to any one of Claims 1 to 7, characterized in that the pile of the root (17) and/or the tip (18) of the vane (9) comprises at least one layer of glass fibres in the zones coming into contact with, respectively, the central body (14) and the annular wall (6a) of the duct (6).

9. Vane according to any one of Claims 1 to 8, characterized in that at least one from among the tip (18) and root (17) of the vane (9) includes, between two transverse laminated fastening tabs (28, 29) extending in opposite directions from one another, a laminated closing sole (39) comprising a pile of at least one ply of fabric of reinforcing fibres towards the inside of the vane (9), and of at least one ply of fabric of glass fibres towards the outside of the vane (9), the warp or the weft of the plies of fabric being orientated substantially along the transverse direction of the fastening tabs (28, 29).

10. Vane according to any one of Claims 1 to 9, characterized in that at least one fastening tab (25, 26, 28, 29) of the vane root (17) and/or of the vane tip (18) is cambered with respect to the suction face part (21) or pressure face part (22) of the vane (19) which it extends and extends above or respectively below the said suction face part (21) or respectively pressure face part (22), being curved and/or inclined in a way that substantially corresponds to the curvature of a surface of the central body (14) or of the annular duct-wall (6a) to which it is to be fastened, and/or so that the vane (9) is inclined to the radial direction with respect to the axis (X-X) of the duct (6) and/or at a slant from its vane root (17) towards its vane tip (18) and from the upstream end to the downstream end in the duct (6).

11. Vane according to Claim 10, characterized in that at least one fastening tab (25, 26) of the vane root (17') exhibits a part (34) bent substantially radially with respect to the axis (X-X) of the duct (6) for resting and fastening against a radial fastening flange of the central body (14).

12. Vane according to any one of Claims 1 to 11, characterized in that the vane root (37) exhibits just one fastening tab (38) extending substantially transversely on just one side of the vane, and consisting of a pile comprising extensions of the laminated suction face and pressure face parts of the main vane section (19) of the vane.

13. Vane according to any one of Claims 1 to 10, characterized in that the vane root (47) exhibits a fastening tab extending substantially in the longitudinal extension of the main vane section (19) and intended to be fastened (48), preferably removably, simply resting against a take-up tab (45) projecting outwards from the central body (44) of the flow-straightener.

14. Vane according to Claim 13, characterized in that the take-up tab (55a) is one of the two tabs (55a, 55b) of a take-up clevis (55) projecting outwards from the central body (54) and in which clevis the fastening tab (57) of the vane root is engaged and held (58).

15. Vane according to any one of Claims 10 to 14, characterized in that the fastening tab or tabs (28, 29) of the vane tip (18) is/are fastened removably by screwing (30) onto an insert (31) mounted in the annular wall (6a) of the duct (6), and the fastening tab or tabs (25, 26) of the vane root (17) is/are fixed by riveting or screwing (27) onto the central body (14).

16. Vane according to any one of Claims 1 to 15, characterized in that it is solid.

17. Vane according to any one of Claims 1 to 15, characterized in that it is hollow.

18. Vane according to any one of Claims 1 to 15, characterized in that the suction face part (21) and pressure face part (22) constitute laminated skins forming a rigid shell surrounding a core (20) of cellular or foamed lightweight synthetic material, preferably having its external surface compacted and/or rendered proof against the resin used for agglomerating the laminated skins (21, 22).

19. Flow-straightener, for a ducted counter-torque device of a rotary-wing aircraft, such as a helicopter, said flow-straightener (8) being intended to be fastened in a duct (6), of axis (X-X) substantially transversal to the longitudinal axis of the aircraft, and passing through a rear part (2) of the aircraft in which part said duct (6) is delimited by an annular wall (6a), in which duct (6) a rotor (7) is mounted substantially coaxially and driven in rotation by a mechanism (14a) fastened substantially coaxially in the duct (6), so that the rotation of the rotor (7) generates an airflow in the duct (6),
said flow-straightener (8) being fastened in the duct (6) downstream of the rotor (7) with respect to the direction of airflow, and including an annular central body (44;54;74) surrounding the rotational-drive mechanism (14a), as well as vanes (9,69) each one exhibiting a main vane section (19) with aerodynamic profile straightening out the airflow downstream of the rotor (7) towards the axis (X-X) of the duct (6), and extending between a vane root (17;47;57) and a vane tip (18) at the ends of the main vane section (19), the vane (9,69) being fastened by said root (17;47;57) and said tip (18) respectively to the central body (44;54;74) and to the annular duct-wall (6a) of the duct (6), so as to support the rotational-drive mechanism (14a) and the rotor (7) in the duct (6), characterized in that the annular central body (44;54;74) of the flow-straightener (8) exhibits a lateral wall (75) of cylindrical or cylindro-conical shape having an external surface which is substantially axially of revolution, to which the composite vanes (9,69) with suction face (21) and pressure face (22) parts of their main vane section each comprising at least a layer of reinforcing fibres made rigid by a synthetic agglomerating resin are connected by their root (17;47;57), as well as a flange (76) projecting radially inwards, preferably at one of its axial ends, for linking to the rotational drive mechanism (14a), and a turned-down rigidifying edge (77) projecting radially inwards, preferably at the other axial end.

20. Flow-straightener according to Claim 19, characterized in that each vane (9) is individually attached, in a removable manner, to the central body (44;54).

21. Flow-straightener according to Claim 20, characterized in that the central body (44) is made of metal and exhibits take-up tabs (45) projecting outwards from its lateral wall and to each of which is fastened the root (47) of a vane exhibiting a fastening tab substantially in the extension of its main vane section.

22. Flow-straightener according to Claim 20, characterized in that the central body (54) is made of a composite material compression-moulded in the hot state and comprising short reinforcing fibres, preferably made of glass, embedded in a thermosetting matrix, preferably of the vinyl ester type, and for each vane exhibits a clevis (55) projecting outwards from its annular lateral wall and in which the vane root (57) is held (58), as well as a rigidifying rib (56) projecting towards the inside of said wall, substantially in the region of said clevis (55).

23. Flow-straightener according to Claim 19, characterized in that the central body (74) and the vanes (69) are of a single piece made of composite material, the root of each vane (69) longitudinally extending the corresponding vane (69) and being linked to the central body (74), comprising a pile of layers of reinforcing fibres substantially of the same nature as those of the vanes (69) and agglomerated using the same resin, by linking layers (78, 79) of reinforcing fibres also substantially of the same nature as those of the vanes (69) and also agglomerated using the same resin.

24. Method for manufacturing a vane (9) for a flow-straightener (8), the vane (9) being composite and having a suction face part (21) and pressure face part (22) of its main vane section each comprising at least one layer of reinforcing fibres made rigid by a synthetic agglomerating resin, characterized in that it comprises the steps consisting in moulding the vane (9) in a closed mould (61) under vacuum, by injecting the said synthetic resin, which is a substantially liquid thermosetting injection moulding resin into a preform (65) arranged in the mould (61) and made up beforehand using layers of reinforcing fibres, essentially made of carbon, to substantially the shape of the vane (9).

25. Method according to Claim 24, characterized in that it comprises the steps consisting in:
- preparing the set of plies of fabric and/or webs and/or braids of reinforcing fibres, essentially dry, constituting the layers of fibres, with the dimensions required to form the vane (9),
- laying-up the prepared elements with a defined laying-up method in order to form the vane (9), around a core (20) of synthetic lightweight material formed beforehand, so as to produce a vane preform (65) having a core (20) surrounded by a sheath of reinforcing fibres,
- arranging the preform (65) in the injection mould (61), of the type having at least two complementary parts (61a, 61b) with complementary internal cavities (62a, 62b) corresponding to the shape of the vane (9),
- closing the mould (61) in a sealed manner and creating a vacuum therein,
- injecting under pressure into the mould (61) a thermosetting resin at an injection temperature for which the resin is substantially liquid and of low viscosity, preferably not greater than 100 mPa.s, and ensuring that all the layers of reinforcing fibres are impregnated,
- carrying out a cycle of polymerizing the resin and then, after cooling the mould (61) and its contents,
- opening the mould (61) and releasing the vane (9).

26. Method according to Claim 25, characterized in that it also comprises a step of spreading a thermoreversible epoxy binder onto the plies of fabric and/or webs and/or braids of reinforcing fibres of the laid-up article.

27. Method according to one of Claims 25 and 26, characterized in that it comprises the step consisting in forming the core (20) by compressing a block of foam in a mould, and superficially making it more dense.

28. Method according to Claim 27, characterized in that it comprises the step consisting in rendering the external surface of the core (20) proof against the injection resin before laying-up.

29. Method according to Claim 28, characterized in that it consists in rendering the surface of the core (20) proof against the resin by applying around the core (20), a heat-shrinkable skin which is welded to the core (20) and then thermoformed.

30. Method according to Claim 28, characterized in that it consists in rendering the surface of the core (20) proof against the resin by superficially rendering the block of foam more dense, under the action of heat, when compressing it.

31. Method for manufacturing a flow-straightener (8), the annular central body (74) and the vanes (69) of which are of a single piece made of composite material, characterized in that it comprises the steps consisting in:
- compacting a core (20) of lightweight cellular or foamed synthetic substance for each of the vanes (69) of the flow-straightener,
- making a preform (65) for each vane (69) by laying-up layers of reinforcing fibres, previously prepared to the necessary dimensions, on the corresponding core (20),
- making a preform of the flow-straightener central body (74) by laying-up and piling up the various layers of reinforcing fibres, previously prepared, which it includes,
- placing the preforms (65) of the vanes (69) and the preform of the flow-straightener body (74) in an injection mould,
- laying-up, in the injection mould, layers of linking reinforcing fibres (78, 79) between the preforms (65) of the vanes and of the flow-straightener body (74),
- closing the mould in a sealed fashion, creating a vacuum therein, preferably via the vane tips, and injecting a thermosetting resin at an injection temperature such that it has a low viscosity and is substantially liquid, then
- carrying out a polymerization cycle and finally releasing the flow-straightener (8) from the mould.

## Patentansprüche

1. Leiteinrichtungsschaufel für eine stromlinienförmige Gegendrehmomentvorrichtung für Drehflügler-Luftfahrzeuge, wie z.B. für Hubschrauber,
wobei die Schaufel (9) dazu bestimmt ist, in einen Leiteinrichtungsstator (8) integriert zu werden, der seinerseits in einem Kanal (6) mit einer Achse (X-X) befestigt ist, die im wesentlichen quer zur Längsachse des Luftfahrzeugs verläuft und einen Luftfahrzeug-Heckteil (2) durchläuft, in dem der Kanal (6) durch eine ringförmige Wand (6a) begrenzt ist, wobei im Kanal (6) darin im wesentlichen koaxial ein Rotor (7) angebracht ist, der durch einen im wesentlichen koaxial im Kanal (6) angebrachten Mechanismus (14a) drehangetrieben wird, so daß die Drehung des Rotors (7) eine Luftströmung im Kanal (6) erzeugt, wobei der Leiteinrichtungsstator (8) im Kanal (6) in bezug auf die Luftströmungsrichtung strömungsabwärts vom Rotor (7) befestigt ist und außerdem einen ringförmigen, den Drehantriebsmechanismus (14a) umgebenden Zentralkörper (14) enthält,
wobei die Schaufel (9) einen Strömungsteil (19) mit aerodynamischem Profil aufweist, der die Luftströmung strömungsabwärts vom Rotor (7) zur Achse (X-X) des Kanals (6) hin leitet und der sich zwischen einem Schaufelfuß (17; 17'; 37; 47; 57) und einem Schaufelkopf (18) an den Enden des Strömungsteils (19) erstreckt, wobei die Schaufel (9) mit dem Fuß (17; 17'; 37; 47; 57) und dem Kopf (18) am Zentralkörper (14) bzw. an der ringförmigen Wand (6a) des Kanals (6) befestigt ist, um den Drehantriebsmechanismus (14a) und den Rotor (7) im Kanal (6) zu tragen, **dadurch gekennzeichnet**, daß die Schaufel aus Verbund ist und ihr Strömungsteil (19) einen Saugseitenteil (21) und Druckseitenteil (22) aufweist, die geschichtet sind und jeweils einen Stapel aus wenigstens drei Schichten von Verstärkungsfasern, im wesentlichen aus Carbon, aufweisen, die durch ein synthetisches wärmeaushärtendes Preßharz versteift sind, wobei die innere und/oder die äußere Schicht des Stapels zwei Anordnungen aus im wesentlichen in einer Richtung verlaufenden und in bezug zueinander unter etwa 30° bis etwa 70° und in bezug auf die Längsachse der Schaufel (9) entlang ihrer Spannweite im wesentlichen symmetrisch ausgerichteten Fasern enthalten, und die Zwischenschicht eine Anordnung von im wesentlichen in einer Richtung ausgerichteten Fasern entlang der Längsachse der Schaufel (9) enthält, wobei der Fuß (17; 17'; 37; 47; 57) und/oder der Kopf (18) der Schaufel wenigstens einen Befestigungslappen (25, 26, 28, 29) aufweisen, der einen Stapel von Verlängerungen der Verstärkungsfaserschichten des Druckseitenteils (22) und/oder Saugseitenteils (21) des Strömungsteils (19) mit wenigstens einem komplementären Stapel mit einer Mittelschicht aus im wesentlichen in einer Richtung verlaufenden Verstärkungsfasern enthält, die im wesentlichen parallel zu denjenigen der Zwischenschicht im Fuß (17; 17'; 37; 47; 57) oder im Kopf (18) der entsprechenden Schaufel ausgerichtet sind, und zwischen zwei Lagen von gleichgeordnetem Gewebe aus Verstärkungsfasern, deren Kette im wesentlichen parallel zu den in einer Richtung verlaufenden Fasern der Mittelschicht ausgerichtet ist.

2. Schaufel nach Anspruch 1, **dadurch gekennzeichnet**, daß ihre geschichteten Teile (21, 22, 23, 24, 25, 26, 28, 29) einen Anteil an Verstärkungsfasern von etwa 40 % bis etwa 60 % im Volumen haben.

3. Schaufel nach einem der Ansprüche 1 und 2, **dadurch gekennzeichnet**, daß die innere Schicht des Stapels einen aus den folgenden Aufbauten gewählten Aufbau hat: ein Gewebe aus im wesentlichen in einer Richtung entlang der Längsachse der Schaufel (9) ausgerichteten Verstärkungsfasern und wenigstens eine Lage aus Gewebe, das bezüglich der im wesentlichen entlang der Längsachse der Schaufel (9) ausgerichteten Kette im wesentlichen zu 90 % aus Carbonfasern und bezüglich dem Gewebeschuß im wesentlichen zu 10 % aus Glas- oder Carbonfasern besteht.

4. Schaufel nach einem der Ansprüche 1 bis 3, **dadurch gekennzeichnet**, daß die innere und/oder äußere Schicht des geschichteten Saugseitenteils (21) und Druckseitenteils (22) ihres Strömungsteils (19) einen unter den folgenden Aufbauten gewählten Aufbau hat: ein Längsgeflecht aus Carbonfasern, die zwischen etwa 30° bis 70° in bezug zueinander und in bezug auf die Längsachse der Schaufel (9) im wesentlichen symmetrisch ausgerichtet sind, und wenigstens zwei übereinander angeordnete Decken aus Carbonfasern, die im wesentlichen in einer Richtung verlaufen und im wesentlichen symmetrisch mit etwa ± 15° bis etwa ± 35° in bezug auf die Längsachse der Schaufel (9) ausgerichtet sind.

5. Schaufel nach einem der Ansprüche 1 bis 4, **dadurch gekennzeichnet**, daß die Zwischenschicht des geschichteten Saugseitenteils (21) und Druckseitenteils (22) des Strömungsteils (19) eine aus den folgenden Aufbauten gewählten Aufbau hat: ein Geflecht aus im wesentlichen in einer Richtung entlang der Längsachse der Schaufel (9) ausgerichteten Verstärkungsfasern, eine Übereinanderlagerung wenigstens zweier Decken aus im wesentlichen in einer Richtung entlang der Längsachse der Schaufel (9) ausgerichteten Verstärkungsfasern und eine Übereinanderlagerung wenigstens zweier Lagen aus zumindest einem Gewebe, das bezüglich der im wesentlichen entlang der Längsachse der Schaufel (9) ausgerichteten Kette im wesentlichen zu 90 % aus Karbonfasern und bezüglich des Gewebeschusses im wesentlichen zu 10 % aus Glas- oder Carbonfasern besteht.

6. Schaufel nach einem der Ansprüche 1 bis 5, **dadurch gekennzeichnet**, daß die Mittelschicht der Fasern des komplementären Stapels in Höhe des Fußes (17) und/oder des Kopfes (18) der Schaufel einen aus den folgenden Aufbauten gewählten Aufbau enthält: wenigstens eine Decke aus in einer Richtung verlaufenden Fasern und wenigstens eine Lage aus Gewebe, das bezüglich der Kette im wesentlichen zu 90 % aus Carbonfasern und bezüglich des Schusses zu 10 % aus Glas- oder Carbonfasern besteht.

7. Schaufel nach einem der Ansprüche 1 bis 6, **dadurch gekennzeichnet**, daß in Höhe des Fußes (17) der Schaufel (9) der komplementäre Stapel einen Stapel aus wenigstens zwei Lagen aus Verstärkungsfaser-Gewebe, dessen Kette oder Schuß im wesentlichen parallel zur Längsachse der Schaufel (9) ausgerichtet ist, und aus wenigstens zwei gekreuzten Lagen aus Verstärkungsfaser-Gewebe enthält, dessen Kette oder Schuß im wesentlichen unter 45 % gegenüber der Längsachse der Schaufel (9) ausgerichtet ist.

8. Schaufel nach einem der Ansprüche 1 bis 7, **dadurch gekennzeichnet**, daß der Stapel des Fußes (17) und/oder des Kopfes (18) der Schaufel (9) wenigstens eine Schicht aus Glasfasern in denjenigen Zonen enthält, die mit dem Zentralkörper (14) bzw. der ringförmigen Wand (6a) des Kanals (6) in Berührung kommen.

9. Schaufel nach einem der Ansprüche 1 bis 8, **dadurch gekennzeichnet**, daß der Kopf (18) und/oder der Fuß (17) der Schaufel (9) zwischen zwei quer verlaufenden, geschichteten Befestigungslappen (28, 29), die sich in zueinander entgegengesetzten Richtungen erstrecken, eine geschichtete Abschlußsohle (39) enthalten, die einen Stapel aus wenigstens einer Gewebelage aus Verstärkungsfasern zum Inneren der Schaufel (9) hin und wenigstens eine Gewebelage aus Glasfasern zum Äußeren der Schaufel (9) hin aufweist, wobei die Kette oder der Schuß der Gewebelagen im wesentlichen entsprechend der Querrichtung der Befestigungslappen (28, 29) ausgerichtet ist.

10. Schaufel nach einem der Ansprüche 1 bis 9, **dadurch gekennzeichnet**, daß wenigstens ein Befestigungslappen (25, 26, 28, 29) des Fußes (17) und/oder des Kopfes (18) der Schaufel in bezug auf den Saugseitenteil (21) oder den Druckseitenteil (22) der Schaufel (19) gewölbt ist, die er verlängert, und sich oberhalb bzw. unterhalb des Saugseitenteils (21) bzw. des Druckseitenteils (22) erstreckt, wobei er in einer Weise gewölbt und/oder geneigt ist, die im wesentlichen der Krümmung einer Oberfläche des Zentralkörpers (14) oder der Seitenwand (6a) des Kanals entspricht, auf welcher er befestigt werden soll, und/oder derart, daß die Schaufel (9) gegenüber der in bezug auf die Achse (X-X) des Kanals (6) radialen Richtung geneigt und/oder von ihrem Fuß (17) zu ihrem Schaufelkopf (18) und von der Strömungsoberseite zur Strömungsunterseite im Kanal (6) gepfeilt ist.

11. Schaufel nach Anspruch 10, **dadurch gekennzeichnet**, daß wenigstens ein Befestigungslappen (25, 26) des Schaufelfußes (17') einen im wesentlichen radial in bezug auf die Achse (X-X) des Kanals (6) geknickten Teil (34) zur Stützung und Befestigung an einem radialen Befestigungsflansch des Zentralkörpers (14) aufweist.

12. Schaufel nach einem der Ansprüche 1 bis 11, **dadurch gekennzeichnet**, daß der Schaufelfuß (37) einen einzigen Befestigungslappen (38) aufweist, der sich im wesentlichen quer auf nur einer Seite der Schaufel erstreckt und aus einem Verlängerungen des geschichteten Saugseiten- und Druckseitenteiles des Srömungsteiles (19) der Schaufel enthaltenden Stapel besteht.

13. Schaufel nach einem der Ansprüche 1 bis 10, **dadurch gekennzeichnet**, daß der Schaufelfuß (47) einen Befestigungslappen aufweist, der sich im wesentlichen in der Längsverlängerung des Strömungsteils (19) erstreckt und bevorzugt in lösbarer Weise unter einfacher Abstützung an einem nach außen vom Zentralkörper (44) der Leiteinrichtung abstehenden Aufnahmelappen (45) befestigt (48) werden soll.

14. Schaufel nach Anspruch 13, **dadurch gekennzeichnet**, daß der Aufnahmelappen (55a) einer von zwei Lappen (55a, 55b) einer Aufnahmekappe (55) ist, die vom Zentralkörper (54) nach außen absteht und in welcher der Befestigungslappen (57) des Schaufelfußes in Eingriff steht und gehalten (58) ist.

15. Schaufel nach einem der Ansprüche 10 bis 14, **dadurch gekennzeichnet**, daß der oder die Befestigungslappen (28, 29) des Schaufelkopfes (18) in einer lösbaren Weise durch Verschraubung (30) an einem an der ringförmigen Wand (6a) des Kanals (6) angebrachten Einsatz (31) befestigt ist/sind und der oder die Befestigungslappen (25, 26) des Schaufelfußes (17) durch Vernietung oder Verschraubung (27) am Zentralkörper (14) befestigt ist/sind.

16. Schaufel nach einem der Ansprüche 1 bis 15, **dadurch gekennzeichnet**, daß sie aus Vollmaterial ist.

17. Schaufel nach einem der Ansprüche 1 bis 15, **dadurch gekennzeichnet**, daß sie hohl ist.

18. Schaufel nach einem der Ansprüche 1 bis 15, **dadurch gekennzeichnet**, daß das Saugseitenteil (21) und das Druckseitenteil (22) geschichtete Verkleidungen darstellen, die eine steife Schale bilden, die einen aus leichtem, wabenförmigen synthetischen Material oder aus Schaummaterial bestehenden Kern (20) umgibt, der vorzugsweise eine verfestigte und/oder gegenüber dem Preßharz der geschichteten Verkleidungen (21, 22) dicht ausgeführte äußere Oberfläche hat.

19. Leiteinrichtung für eine stromlinienförmige Gegendrehmomentvorrichtung für Drehflügler-Luftfahrzeuge, wie z.B. für Hubschrauber,
wobei die Leiteinrichtung (8) dazu bestimmt ist, in einem Kanal (6) mit einer Achse (X-X) befestigt zu werden, die im wesentlichen quer zur Längsachse des Luftfahrzeuges verläuft und einen Luftfahrzeug-Heckteil (2) durchläuft, in dem der Kanal (6) durch eine ringförmige Wand (6a) begrenzt ist, wobei im Kanal (6) darin im wesentlichen koaxial ein Rotor (7) angebracht ist, der durch einen im wesentlichen koaxial im Kanal (6) angebrachten Mechanismus (14a) drehangetrieben wird, so daß die Drehung des Rotors (7) eine Luftströmung im Kanal (6) erzeugt,
wobei die Leiteinrichtung (8) im Kanal (6) in bezug auf die Luftströmungsrichtung strömungsabwärts vom Rotor (7) befestigt ist und einen ringförmigen, den Drehantriebsmechanismus (14a) umgebenden Zentralkörper (44; 54; 74) sowie Schaufeln (9; 69) enthält, die jeweils einen Strömungsteil (19) mit aerodynamischem Profil aufweisen, der die Luftströmung strömungsabwärts vom Rotor (7) zur Achse (X-X) des Kanals (6) hin leitet und der sich zwischen einem Schaufelfuß (17; 47; 57) und einem Schaufelkopf (18) an den Enden des Strömungsteils (19) erstreckt, wobei die Schaufel (9; 69) mit dem Fuß (17; 47; 57) und dem Kopf (18) am Zentralkörper (44; 54; 74) bzw. an der ringförmigen Wand (6a) des Kanals (6) befestigt ist, um den Drehantriebsmechanismus (14a) und den Rotor (7) im Kanal (6) zu tragen, **dadurch gekennzeichnet**, daß der ringförmige Zentralkörper (44; 54; 74) der Leiteinrichtung (8) eine Seitenwand (75) von zylindrischer oder zylinderkonischer Form mit im wesentlichen axialdrehsymmetrischer Außenfläche, mit der die Schaufeln (9; 69) aus Verbund mit Saugseitenteil (21) und Druckseitenteil (22) ihres Strömungsteils, das jeweils wenigstens eine Schicht aus durch ein synthetisches Preßharz versteiften Verstärkungsfasern enthält, über ihren Fuß (17; 47; 57) verbunden sind, sowie einen radial nach innen vorstehenden Flansch (76) vorzugsweise an einem seiner beiden axialen Enden zur Verbindung mit dem Drehantriebsmechanismus (14a) und einen radial nach innen vorstehenden Versteifungssaum (77) vorzugsweise am anderen axialen Ende aufweist.

20. Leiteinrichtung nach Anspruch 19, **dadurch gekennzeichnet**, daß jede Schaufel (9) einzeln in lösbarer Weise auf dem Zentralkörper (44; 54) aufgesetzt ist.

21. Leiteinrichtung nach Anspruch 20, **dadurch gekennzeichnet**, daß der Zentralkörper (44) aus Metall ist und Aufnahmelappen (45) aufweist, die nach außen von seiner Seitenwand abstehen und an denen jeweils der Fuß (47) einer Schaufel befestigt ist, die einen Befestigungslappen im wesentlichen in der Verlängerung ihres Strömungsteils aufweist.

22. Leiteinrichtung nach Anspruch 20, **dadurch gekennzeichnet**, daß der Zentralkörper (54) aus einem Verbundwerkstoff ausgeführt ist, der durch Warmpressung geformt wird und kurze Verstärkungsfasern, vorzugsweise aus Glas, enthält, die in einer wärmeaushärtenden Matrix, vorzugsweise vom Vinylester-Typ, eingelassen sind, und für jede Schaufel eine Kappe (55), die nach außen von der ringförmigen Seitenwand vorsteht und in der der Fuß (57) der Schaufel gehalten (58) ist, sowie eine Verstärkungsrippe (56) aufweist, die nach innen von der genannten Wand im wesentlichen in Höhe der Kappe (55) vorsteht.

23. Leiteinrichtung nach Anspruch 19, **dadurch gekennzeichnet**, daß der Zentralkörper (74) und die Schaufeln (69) aus einem einzigen Teil aus Verbundwerkstoff bestehen, wobei der Fuß jeder Schaufel (69) in Längsrichtung die entsprechende Schaufel (69) verlängert und mit dem Zentralkörper (74), der einen Stapel von Schichten aus Verstärkungsfasern enthält, die im wesentlichen von gleicher Beschaffenheit wie diejenigen der Schaufeln (69) sind und durch das gleiche Harz verpreßt sind, durch Verbindungsschichten (78, 79) aus Verstärkungsfasern, die im wesentlichen von gleicher Beschaffenheit wie diejenigen der Schaufeln (69) sind und auch mit dem gleichen Harz verpreßt sind, verbunden ist.

24. Verfahren zur Herstellung einer Schaufel (9) einer Leiteinrichtung (8), wobei die Schaufel (9) aus Verbund ist und am Saugseitenteil (21) und am Druckseitenteil (22) ihres Strömungsteils jeweils wenigstens eine Schicht aus durch ein synthetisches Verpressungsharz versteiften Verstärkungsfasern enthält, **dadurch gekennzeichnet**, daß es die Schritte umfaßt, die darin bestehen, die Schaufel (9) durch Spritzen in einer geschlossenen Form (61) und unter Druck aus dem synthetischen Harz zu formen, das ein in einer im wesentlichen flüssigen, wärmeaushärtenden Vorform (65) in die Form (61) eingebrachtes Spritzharz ist und vorher mit Hilfe von Schichten aus Verstärkungsfasern, im wesentlichen aus Carbon, im wesentlichen in die Gestalt der Schaufel (9) gebracht wird.

25. Verfahren nach Anspruch 24, **dadurch gekennzeichnet,** daß es die Schritte umfaßt, die bestehen im:
- Aufbereiten der Anordnung von Gewebelagen und/oder Decken und/oder Geflechten aus Verstärkungsfasern in für die Erzeugung der Schaufel (9) notwendige Abmessungen,
- Streckziehen der vorbereiteten Elemente gemäß einer für die Erzeugung der Schaufel (9) definierten Streckziehung um einen Kern (20) aus vorher geformten synthetischen Leichtmaterial, um eine Schaufelvorform (65) mit Kern (20) zu realisieren, der mit einer Hülle aus Verstärkungsfasern umgeben ist,
- Anordnen der Vorform (65) in der Spritzform (61) vom Typ mit wenigstens zwei komplementären Teilen (61a, 61b) mit komplementären Innenausformungen (62a, 62b) entsprechend der Gestalt der Schaufel (9),
- Schließen der Form (61) in abdichtender Weise und deren Setzen unter Unterdruck,
- Einspritzen eines wärmeaushärtenden Harzes unter Druck in die Form (61) bei einer Einspritztemperatur, bei der das Harz im wesentlichen flüssig und von niedriger Viskosität ist, vorzugsweise nicht höher als 100 mPa·s und bei der eine Tränkung aller Verstärkungsfaserschichten gewährleistet ist,
- Ausführen eines Polymerisationszyklus des Harzes sodann nach Abkühlung der Form (61) und ihres Inhalts,
- Öffnen der Form (61) und Herausheben der Schaufel (9).

26. Verfahren nach Anspruch 25, **dadurch gekennzeichnet**, daß es auch einen Schritt des Beschichtens eines wärmereversiblen Epoxyd-Binders auf den Gewebelagen und/oder Decken und/oder Geflechten aus Verstärkungsfasern der Streckziehung umfaßt.

27. Verfahren nach einem der Ansprüche 25 und 26, **dadurch gekennzeichnet**, daß es den Schritt umfaßt, der darin besteht, einen Kern (20) zu formen, indem ein Schaumkuchen in eine Form gepreßt und dieser oberflächlich verdichtet wird.

28. Verfahren nach Anspruch 27, **dadurch gekennzeichnet**, daß es den Schritt umfaßt, der darin besteht, die Außenfläche des Kerns (20) gegen das Spritzharz vor der Streckziehung dicht zu machen.

29. Verfahren nach Anspruch 28, **dadurch gekennzeichnet**, daß es darin besteht, die Oberfläche des Kerns (20) gegen das Harz durch Aufbringung einer auf den hinterher wärmegeformten Kern (20) aufgeschweißten und wärmeeinziehbaren Verkleidung um den Kern (20) dicht zu machen.

30. Verfahren nach Anspruch 28, **dadurch gekennzeichnet**, daß es darin besteht, die Oberfläche des Kerns (20) gegen das Harz durch oberflächliche, warm abbindende Verdichtung des Schaumkuchens bei seiner Pressung dicht zu machen.

31. Verfahren zur Herstellung einer Leiteinrichtung (8), deren ringförmiger Zentralkörper (74) und Schaufeln (69) aus einem einzigen Stück aus Verbundmaterial bestehen, **dadurch gekennzeichnet**, daß es die Schritte umfaßt, die bestehen im:
- Verdichten eines Kerns (20) aus wabenförmigem leichten synthetischen Material oder aus Schaummaterial für jede Schaufel (69) der Leiteinrichtung,
- Realisieren einer Vorform (65) für jede Schaufel (69), indem die vorher für die erforderlichen Abmessungen aufbereiteten Verstärkungsfaserschichten auf den entsprechenden Kern (20) streckgezogen werden,
- Realisieren einer Vorform des Zentralkörpers (74) der Leiteinrichtung durch Streckziehen und Stapeln verschiedener vorher aufbereiteter Verstärkungsfaserschichten, die er enthält,
- Einführen der Vorformen (65) der Schaufeln (69) und der Vorform des Leiteinrichtungskörpers (74) in eine Spritzform,
- Streckziehen von Verbindungsverstärkungsfaserschichten (78, 79) zwischen den Vorformen (65) der Schaufeln und des Leiteinrichtungskörpers (74) in der Spritzform,
- Schließen der Form in abdichtender Weise, Setzen derselben unter Unterdruck, vorzugsweise über den Kopf der Schaufeln, und Einspritzen eines wärmeaushärtenden Harzes bei einer solchen Einspritztemperatur, daß es eine niedrige Viskosität aufweist und im wesentlichen flüssig ist, danach
- Gewährleisten eines Polymerisationszyklus und schließlich Herausheben der Leiteinrichtung (8).
